# EUROPEAN PATENT APPLICATION

(11) **EP 4 174 999 A1**
(43) Date of publication of application: **03.05.2023**
(21) Application number: 21832100.8
(22) Date of filing: 29.06.2021
(51) Int. Cl.: H01M 10/052, H01M 10/0585, H01M 50/105

(54) **EXTERIOR MATERIAL FOR ALL-SOLID-STATE BATTERY, METHOD FOR MANUFACTURING SAME, AND ALL-SOLID-STATE BATTERY**

(30) Priority: 29.06.2020 JP 2020112190
(71) Applicant: DAI NIPPON PRINTING CO., LTD., Tokyo 162-8001 (JP)
(72) Inventor: OKANO, Ai, Tokyo 162-8001 (JP); SASAKI, Miho, Tokyo 162-8001 (JP)
(74) Representative: Müller-Boré & Partner Patentanwälte PartG mbB
(86) International application number: PCT/JP2021/024576
(87) International publication number: WO 2022/004729

(57) **Abstract**

An all-solid-state battery packaging material comprising a laminate comprising at least a base material layer, a barrier layer, and a heat-sealable resin layer in this order from an outer side, wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.

## Description

### Technical Field

The present disclosure relates to an all-solid-state battery packaging material, a method for producing the same, and an all-solid-state battery.

### Background Art

Various types of power storage devices have been heretofore developed, and lithium ion batteries, for example, are used in a wide range of fields.

In every power storage device, an exterior material (packaging material) is an essential member for sealing a power storage device element including electrodes, an electrolyte, and the like. In a lithium ion battery, for example, an electrolytic solution is sealed with the packaging material.

Power storage devices containing an electrolytic solution prepared with an organic solvent cannot be used in a temperature environment equal to or above the boiling point of the electrolytic solution. On the other hand, all-solid-state batteries containing a solid electrolyte as the electrolyte are known. All-solid-state batteries, which do not contain an organic solvent in the batteries, have advantages such as high safety and a wide range of operating temperatures.

### Citation List

### Patent Literature

Patent Literature 1: JP 2012-142228 A
Patent Literature 2: JP 2008-103288 A

### Summary of Invention

### Technical Problem

As a power storage device packaging material that can be readily processed into various shapes, and can achieve a thickness reduction and a weight reduction, a packaging material is known that is formed of a laminated film in which a base material/a barrier layer/a heat-sealable resin layer are laminated in this order. In such a power storage device packaging material, typically, a concave portion is formed by cold molding, a power storage device element including electrodes, an electrolytic solution, and the like is disposed in the space formed by the concave portion, and the heat-sealable resin layers are heat-sealed. As a result, a power storage device in which the power storage device element is housed inside the power storage device packaging material is obtained.

Unlike in a power storage device that uses an electrolytic solution, an all-solid-state battery uses a solid electrolyte. Therefore, when the packaging material formed of the laminated film is to be applied to the all-solid-state battery, it is necessary to form a space that conforms to the shape of the solid electrolyte (for example, if the solid electrolyte has a substantially rectangular parallelepiped shape, a space containing a shape resembling a square) in the packaging material, in order to effectively use the space formed by the packaging material as much as possible.

However, the packaging material formed of the laminated film is very thin, and prone to pinholes due to molding, as compared to a metal can and the like. Thus, the inventors of the present disclosure faced the problem that there is a need to further improve the moldability of an all-solid-state battery packaging material.

Under such circumstances, it is a main object of the present disclosure to provide an all-solid-state battery packaging material comprising a laminate comprising at least a base material layer, a barrier layer, and a heat-sealable resin layer in this order from an outer side, which packaging material has excellent moldability.

### Solution to Problem

The inventors of the present disclosure have conducted extensive research to solve the aforementioned problem. As a result, they have found that an all-solid-state battery packaging material comprising a laminate comprising at least a base material layer, a barrier layer, and a heat-sealable resin layer in this order from an outer side, wherein a value obtained by dividing a stress (MPa) at 2% stretching by a stress (MPa) at a rupture point, as measured using a test method for tensile properties as specified in JIS K7127:1999, in at least one of MD and TD directions of the base material layer, is 0.25 or less, has excellent moldability, and can be suitably used as an all-solid-state battery packaging material.

The present disclosure has been completed as a result of further research based on these findings. In summary, the present disclosure provides an embodiment of the invention as set forth below:
An all-solid-state battery packaging material comprising a laminate comprising at least a base material layer, a barrier layer, and a heat-sealable resin layer in this order from an outer side, wherein
a value obtained by dividing a stress (MPa) at 2% stretching by a stress (MPa) at a rupture point, as measured using a test method for tensile properties as specified in JIS K7127:1999, in at least one of MD and TD directions of the base material layer, is 0.25 or less.

### Advantageous Effects of Invention

The present disclosure can provide an all-solid-state battery packaging material comprising a laminate comprising at least a base material layer, a barrier layer, and a heat-sealable resin layer in this order from an outer side, which packaging material has excellent moldability. The present disclosure can also provide a method for producing the all-solid-state battery packaging material and an all-solid-state battery.

### Brief Description of Drawings

Fig. 1 is a schematic diagram showing one exemplary cross-sectional structure of an all-solid-state battery to which an all-solid-state battery packaging material of the present disclosure is applied.
Fig. 2 is a schematic diagram showing one exemplary cross-sectional structure of an all-solid-state battery to which an all-solid-state battery packaging material of the present disclosure is applied.
Fig. 3 is a schematic plan view of one exemplary all-solid-state battery to which an all-solid-state battery packaging material of the present disclosure is applied.
Fig. 4 is a schematic cross-sectional view showing one exemplary laminated structure of an all-solid-state battery packaging material of the present disclosure.
Fig. 5 is a schematic cross-sectional view showing one exemplary laminated structure of an all-solid-state battery packaging material of the present disclosure.
Fig. 6 is a schematic cross-sectional view showing one exemplary laminated structure of an all-solid-state battery packaging material of the present disclosure.
Fig. 7 is a schematic diagram for explaining a method of preparing a sample for measurement of sealing strength.
Fig. 8 is a schematic diagram for explaining a method of measuring sealing strength.

### Description of Embodiments

An all-solid-state battery packaging material of the present disclosure is an all-solid-state battery packaging material comprising a laminate comprising at least a base material layer, a barrier layer, and a heat-sealable resin layer in this order from an outer side, wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less. Because of these features, the all-solid-state battery packaging material of the present disclosure exhibits excellent moldability.

The all-solid-state battery packaging material of the present disclosure will be hereinafter described in detail. In the present specification, any numerical range indicated by "... to ..." is intended to mean "... or more" and "... or less". For example, the recitation "2 to 15 mm" is intended to mean 2 mm or more and 15 mm or less.

### 1. Laminated Structure and Physical Properties of All-Solid-State Battery Packaging Material

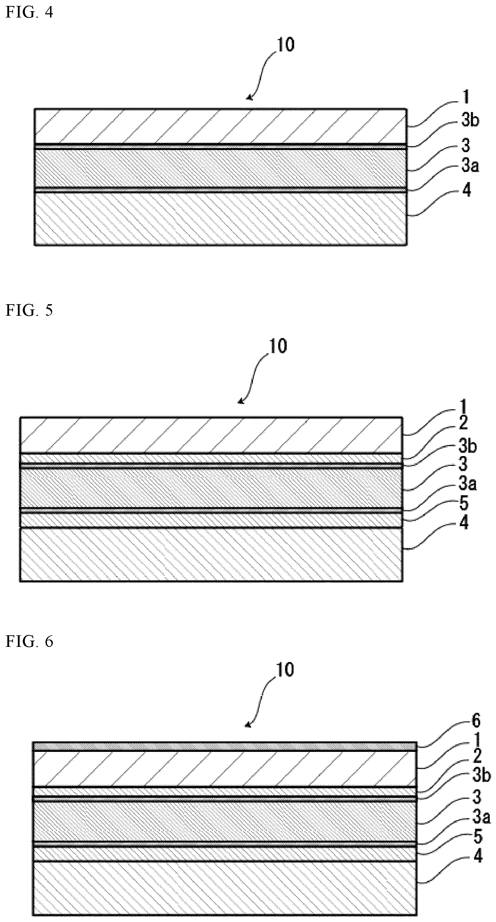

As shown in Figs. 4 to 6, for example, an all-solid-state battery packaging material 10 of the present disclosure (hereinafter sometimes referred to as "packaging material 10") comprises a laminate comprising at least a base material layer 1, a barrier layer 3, and a heat-sealable resin layer 4 in this order. In the packaging material 10, the base material layer 1 is the outermost layer, and the heat-sealable resin layer 4 is the innermost layer. During assembly of an all-solid-state battery using the packaging material 10 and a battery element, the battery element is housed in a space formed by heat-sealing peripheral regions of the heat-sealable resin layers 4 of the packaging material 10 opposed to each other.

As shown in Figs. 5 and 6, the all-solid-state battery packaging material 10 may optionally have an adhesive agent layer 2 between the base material layer 1 and the barrier layer 3, for the purpose of, for example, improving the adhesiveness between these layers. Moreover, as shown in Figs. 5 and 6, the all-solid-state battery packaging material 10 may also optionally have an adhesive layer 5 between the barrier layer 3 and the heat-sealable resin layer 4, for the purpose of, for example, improving the adhesiveness between these layers. Moreover, as shown in Fig. 6, a surface coating layer 6 or the like may be optionally provided on an outer side (opposite to the heat-sealable resin layer 4) of the base material layer 1.

While the thickness of the laminate constituting the all-solid-state battery packaging material 10 is not limited, it is preferably about 10,000 µm or less, about 8,000 µm or less, or about 5,000 µm or less, from the viewpoint of reducing costs, improving the energy density, and the like, while it is preferably about 100 µm or more, about 150 µm or more, or about 200 µm or more, from the viewpoint of maintaining the function of the all-solid-state battery packaging material 10 to protect the battery element. Preferred ranges include from about 100 to 10,000 µm, from about 100 to 8,000 µm, from about 100 to 5,000 µm, from about 150 to 10,000 µm, from about 150 to 8,000 µm, from about 150 to 5,000 µm, from about 200 to 10,000 µm, from about 200 to 8,000 µm, and from about 200 to 5,000 µm, with the range of 100 to 500 µm being particularly preferred.

Each of the layers constituting the all-solid-state battery packaging material 10 will be described in detail in the "3. Layers Forming All-Solid-State Battery Packaging Material" section.

From the viewpoint of achieving a high sealing strength in a high-temperature environment of the all-solid-state battery packaging material 10, a sealing strength in a 120°C environment when heat-sealing the heat-sealable resin layers to each other at a temperature of 230°C and a surface pressure of 1.0 MPa for 5 seconds is preferably about 30 N/15 mm or more, and more preferably about 40 N/15 mm or more. On the other hand, the sealing strength is, for example, about 120 N/15 mm or less, about 110 N/15 mm or less, or about 100 N/15 mm or less. Preferred ranges of the sealing strength include from about 30 to 120 N/15 mm, from about 30 to 110 N/15 mm, from about 30 to 100 N/15 mm, from about 40 to 120 N/15 mm, from about 40 to 110 N/15 mm, and from about 40 to 100 N/15 mm.

From the same viewpoint, a sealing strength in a 25°C environment is preferably about 20 N/15 mm or more, more preferably about 30 N/15 mm or more, still more preferably about 40 N/15 mm or more, and even more preferably about 50 N/15 mm or more. On the other hand, the sealing strength is, for example, about 180 N/15 mm or less, about 170 N/15 mm or less, or about 160 N/15 mm or less. Preferred ranges of the sealing strength include from about 20 to 180 N/15 mm, from about 20 to 170 N/15 mm, from about 20 to 160 N/15 mm, from about 30 to 180 N/15 mm, from about 30 to 170 N/15 mm, from about 30 to 160 N/15 mm, from about 40 to 180 N/15 mm, from about 40 to 170 N/15 mm, from about 40 to 160 N/15 mm, from about 50 to 180 N/15 mm, from about 50 to 170 N/15 mm, and from about 50 to 160 N/15 mm. The method of measuring sealing strength is as set forth below.

### [Method of Measuring Sealing Strength]

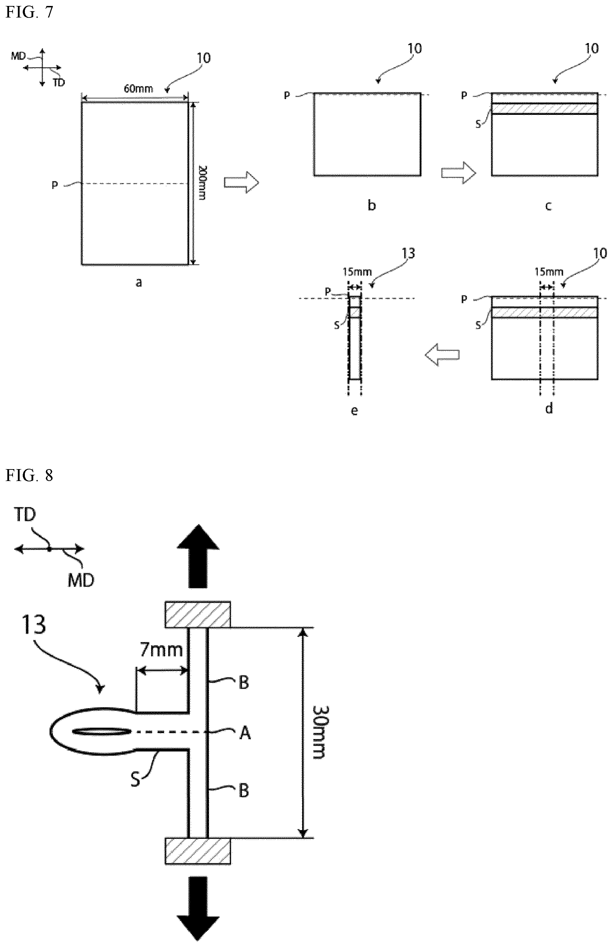

The sealing strength of the packaging material at a measurement temperature of 120°C or 25°C is measured as specified in JIS K7127:1999, as follows. A test sample is prepared by cutting the packaging material into a strip with a width of 15 mm in the TD direction. Specifically, as shown in Fig. 7, first, each packaging material is cut into 60 mm (TD direction) × 200 mm (MD direction) (Fig. 7a). Subsequently, the packaging material is folded in half in the MD direction at the position of the fold P (midpoint in the MD direction), in such a manner that the heat-sealable resin layers are opposed to each other (Fig. 7b). At about 10 mm toward the inner side in the MD direction from the fold P, the heat-sealable resin layers are heat-sealed to each other at a seal width of 7 mm, a temperature of 230°C, and a surface pressure of 1.0 MPa for 5 seconds (Fig. 7c). In Fig. 7c, the shaded region S is the heat-sealed region. Subsequently, the packaging material is cut in the MD direction to give a width of 15 mm in the TD direction (cut at the positions indicated by the double-dotted lines in Fig. 7d) to give a specimen 13 (Fig. 7e). Subsequently, after the specimen 13 is allowed to stand at each measurement temperature for 2 minutes, the heat-sealable resin layers at the heat-sealed region are peeled at a speed of 300 mm/min, using a tensile testing machine (for example, AG-Xplus (trade name) manufactured by Shimadzu Corporation), in each measurement-temperature environment (Fig. 8). The maximum strength at the time of peeling is defined as the sealing strength (N/15 mm). The distance between the chucks is 30 mm. An average value of three measurements is adopted.

### 2. All-Solid-State Battery

The all-solid-state battery to which the all-solid-state battery packaging material 10 of the present disclosure is applied is not limited except that the specific packaging material 10 is used. That is, structural elements (such as electrodes and terminals) and the like other than a solid electrolyte layer 40 and the packaging material 10 are not limited as long as they are applicable to all-solid-state batteries, and may be those used in known all-solid-state batteries. Hereinafter, an embodiment in which the all-solid-state battery packaging material 10 of the present disclosure is applied to an all-solid-state battery will be described in detail, using an all-solid-state battery 70 of the present disclosure as an example.

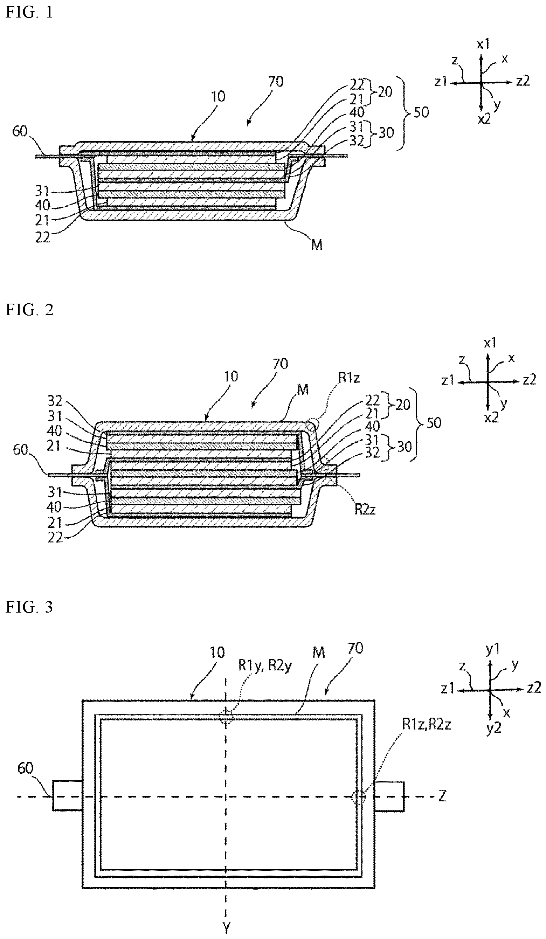

As shown in the schematic diagrams of Figs. 1 and 2, in the all-solid-state battery 70 of the present disclosure, the solid electrolyte layer 40 is laminated between a positive electrode layer 30 and a negative electrode layer 20, and the positive electrode layer 30, the negative electrode layer 20, and the solid electrolyte layer 40 constitute a single cell 50. A battery element including at least the single cell 50 including a positive electrode active material layer 31, a negative electrode active material layer 21, and the solid electrolyte layer 40 laminated between the positive electrode active material layer 31 and the negative electrode active material layer 21 is housed in a package formed of the all-solid-state battery packaging material 10 of the present disclosure. More specifically, the positive electrode active material layer 31 is laminated on a surface of a positive electrode current collector 32 to constitute the positive electrode layer 30, and the negative electrode active material layer 21 is laminated on a surface of a negative electrode current collector 22 to constitute the negative electrode layer 20. The positive electrode current collector 32 and the negative electrode current collector 22 are each bonded to a terminal 60 exposed to the outside, and electrically connected to an external apparatus. The solid electrolyte layer 40 is laminated between the positive electrode layer 30 and the negative electrode layer 20, and the positive electrode layer 30, the negative electrode layer 20, and the solid electrolyte layer 40 constitute the single cell 50. The battery element of the all-solid-state battery 70 may include only one single cell 50 or may include a plurality of single cells 50. Fig. 1 shows an all-solid-state battery 70 including two single cells 50 as a battery element, and Fig. 2 shows an all-solid-state battery 70 in which three single cells 50 are laminated to constitute a battery element.

In the all-solid-state battery 70, the battery element is covered such that a flange portion (region where the heat-sealable resin layers 4 are brought into contact with each other) can be formed on the periphery of the battery element while the terminal 60 connected to each of the positive electrode layer 30 and the negative electrode layer 20 protrudes to the outside, and the heat-sealable resin layers 4 at the flange portion are heat-sealed to each other to achieve hermetic sealing, thus resulting in an all-solid-state battery produced using the all-solid-state battery packaging material. When the battery element is housed in a package formed of the all-solid-state battery packaging material 10 of the present disclosure, the package is formed such that the heat-sealable resin portion of the all-solid-state battery packaging material 10 of the present disclosure is positioned on the inner side (surface that contacts the battery element) thereof.

As described above, the all-solid-state battery to which the packaging material 10 of the present disclosure is applied is not limited as long as the solid electrolyte contains a sulfide solid electrolyte material or an oxide solid electrolyte material, and the specific packaging material 10 is used. The same applies to the all-solid-state battery 70 of the present disclosure. The following describes examples of materials and the like of members constituting the battery element of the all-solid-state battery to which the all-solid-state battery packaging material 10 of the present disclosure is applied.

As described above, in the battery element of the all-solid-state battery 70, at least the positive electrode layer 30, the negative electrode layer 20, and the solid electrolyte layer 40 constitute the single cell 50. The positive electrode layer 30 has a structure in which the positive electrode active material layer 31 is laminated on the positive electrode current collector 32. The negative electrode layer 20 has a structure in which the negative electrode active material layer 21 is laminated on the negative electrode current collector 22. The positive electrode current collector 32 and the negative electrode current collector 22 are each bonded to a terminal 60 exposed to the outside, and electrically connected to an external apparatus.

### [Positive Electrode Active Material Layer 31]

The positive electrode active material layer 31 is a layer containing at least a positive electrode active material. The positive electrode active material layer 31 may optionally further contain a solid electrolyte material, a conductive material, a binder, and the like, in addition to the positive electrode active material.

Examples of the positive electrode active material include, but are not limited to, oxide active materials and sulfide active materials. When the all-solid-state battery is an all-solid-state lithium battery, examples of oxide active materials used as the positive electrode active material include layered rock salt-type active materials such as LiCoO₂, LiMnO₂, LiNiO₂, LiVO₂, and LiNi_{1/3}Co_{1/3}Mn_{1/3}O₂, spinel-type active materials such as LiMn₂O₄ and Li(Ni_{0.5}Mn_{1.5})O₄, olivine-type active materials such as LiFePO₄ and LiMnPO₄, and Si-containing active materials such as Li₂FeSiO₄ and Li₂MnSiO₄. Examples of sulfide active materials used as the positive electrode active material of the all-solid-state lithium battery include copper chevrel, iron sulfide, cobalt sulfide, and nickel sulfide.

The positive electrode active material may be in the form of particles, for example, although the form is not limited thereto. The positive electrode active material preferably has a mean particle diameter (D₅₀) of, for example, about 0.1 to 50 µm. The content of the positive electrode active material in the positive electrode active material layer 31 is preferably about 10 to 99% by mass, and more preferably about 20 to 90% by mass.

The positive electrode active material layer 31 preferably further contains a solid electrolyte material. This can improve ion conductivity in the positive electrode active material layer 31. The solid electrolyte material contained in the positive electrode active material layer 31 is the same as solid electrolyte materials exemplified as the solid electrolyte layer 40 described later. The content of the solid electrolyte material in the positive electrode active material layer is preferably about 1 to 90% by mass, and more preferably about 10 to 80% by mass.

The positive electrode active material layer 31 may further contain a conductive material. The addition of a conductive material can improve electron conductivity of the positive electrode active material layer. Examples of the conductive material include acetylene black, ketjen black, and carbon fibers. The positive electrode active material layer may further contain a binder. Examples of the binder include fluorine-containing binders such as polytetrafluoroethylene (PTFE) and polyvinylidene fluoride (PVDF).

While the thickness of the positive electrode active material layer 31 is set appropriately according to the size and the like of the all-solid-state battery, it is preferably about 0.1 to 1,000 µm.

### [Positive Electrode Current Collector 32]

Materials constituting the positive electrode current collector 32 include, for example, stainless steel (SUS), aluminum, nickel, iron, titanium, and carbon.

While the thickness of the positive electrode current collector 32 is set appropriately according to the size and the like of the all-solid-state battery, it is preferably about 10 to 1,000 µm.

### [Negative Electrode Active Material Layer 21]

The negative electrode active material layer 21 is a layer containing at least a negative electrode active material. The negative electrode active material layer 21 may optionally contain a solid electrolyte material, a conductive material, a binder, and the like, in addition to the negative electrode active material.

Examples of the negative electrode active material include, but are not limited to, carbon active materials, metal active materials, and oxide active materials. Examples of carbon active materials include graphite such as mesocarbon microbeads (MCMB) or highly oriented graphite (HOPG), and amorphous carbon such as hard carbon or soft carbon. Examples of metal active materials include In, Al, Si, and Sn. Examples of oxide active materials include Nb₂O₅, Li₄Ti₅O₁₂, and SiO.

The negative electrode active material may be in the form of particles, a membrane, or the like, although the form is not limited thereto. The negative electrode active material preferably has a mean particle diameter (D₅₀) of, for example, about 0.1 to 50 µm. The content of the negative electrode active material in the negative electrode active material layer 21 is, for example, about 10 to 99% by mass, and more preferably about 20 to 90% by mass.

The negative electrode active material layer 21 preferably further contains a solid electrolyte material. This can improve ion conductivity in the negative electrode active material layer 21. The solid electrolyte material contained in the negative electrode active material layer 21 is the same as solid electrolyte materials exemplified as the solid electrolyte layer 40 described later. The content of the solid electrolyte material in the negative electrode active material layer 21 is preferably about 1 to 90% by mass, and more preferably about 10 to 80% by mass.

The negative electrode active material layer 21 may further contain a conductive material. The negative electrode active material layer 21 may further contain a binder. The conductive material and the binder are the same as those exemplified for the positive electrode active material layer 31 described above.

While the thickness of the negative electrode active material layer 21 is set appropriately according to the size and the like of the all-solid-state battery, it is preferably about 0.1 to 1,000 µm.

### [Negative Electrode Current Collector 22]

Materials constituting the negative electrode current collector 22 include, for example, stainless steel (SUS), copper, nickel, and carbon.

While the thickness of the negative electrode current collector 22 is set appropriately according to the size and the like of the all-solid-state battery, it is preferably about 10 to 1000 µm.

### [Solid Electrolyte Layer 40]

The solid electrolyte layer 40 is a layer containing a solid electrolyte material. Examples of the solid electrolyte material include sulfide solid electrolyte materials and oxide solid electrolyte materials.

Sulfide solid electrolyte materials are preferred in that they often have higher ion conductivity as compared to oxide solid electrolyte materials, while oxide solid electrolyte materials are preferred in that they have higher chemical stability as compared to sulfide solid electrolyte materials.

Specific examples of oxide solid electrolyte materials include compounds with a NASICON-type structure. One example of a compound with a NASICON-type structure is a compound represented by the general formula Li₁₊ₓAlₓGe₂₋ₓ(PO₄)₃ (0 ≤ x ≤ 2). In particular, the compound is preferably Li_{1.5}Al_{0.5}Ge_{1.5}(PO₄)₃. Another example of a compound with a NASICON-type structure is a compound represented by the general formula Li₁₊ₓAlxTi₂₋ₓ(PO₄)₃ (0 ≤x ≤ 2). In particular, the compound is preferably Li_{1.5}Al_{0.5}Ti_{1.5}(PO₄)₃. Other examples of oxide solid electrolyte materials used for all-solid-state lithium secondary batteries include LiLaTiO (for example, Li_{0.34}La_{0.51}TiO₃) and LiPON (for example, Li_{2.9}PO_{3.3}N_{0.46}), and LiLaZrO (for example, Li₇La₃Zr₂O₁₂).

Specific examples of sulfide solid electrolyte materials include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂SP₂S₅-ZmSn (where m and n are each a positive number, and Z is any of Ge, Zn, and Ga), Li₂S-GeS₂, Li₂S-SiS₂-Li₃PO₄, and Li₂S-SiS₂-LiₓMO_{y} (where x and y are each a positive number, and M is any of P, Si, Ge, B, Al, Ga, and In). The designation "Li₂S-P₂S₅" above refers to a sulfide solid electrolyte material obtained using a raw material composition containing Li₂S and P₂S₅, and the same applies to other designations. The sulfide solid electrolyte material may be a sulfide glass or a crystallized sulfide glass.

While the content of the solid electrolyte material in the solid electrolyte layer 40 is not limited, it is preferably 60% by mass or more, more preferably 70% by mass or more, and still more preferably 80% by mass or more. The solid electrolyte layer may contain a binder, or may be formed of the solid electrolyte material alone.

While the thickness of the solid electrolyte layer 40 is set appropriately according to the size and the like of the all-solid-state battery, it is preferably about 0.1 to 1,000 µm, and more preferably about 0.1 to 300 µm.

The all-solid-state battery 70 of the present disclosure can be used in an environment in which it is constrained under high pressure from outside. In this case, from the viewpoint of satisfactorily preventing delamination between the solid electrolyte and the negative electrode active material layer (and between the solid electrolyte and the positive electrode active material layer), the pressure for constraining the all-solid-state battery 70 from outside is preferably about 0.1 MPa or more, more preferably 5 MPa or more, and still more preferably about 10 MPa or more, while it is preferably about 100 MPa or less, more preferably about 70 MPa or less, and still more preferably about 30 MPa or less. Preferred ranges include from about 0.1 to 100 MPa, from about 0.1 to 70 MPa, from about 0.1 to 30 MPa, from about 5 to 100 MPa, from about 5 to 70 MPa, from about 5 to 30 MPa, from about 10 to 100 MPa, from about 10 to 70 MPa, and from about 10 to 30 MPa.

Examples of methods of constraining the all-solid-state battery 70 under high pressure from outside include a method in which the all-solid-state battery is sandwiched between metal plates or the like, and fixed while being pressed under high pressure (for example, tightened with a vise or the like); and gas pressurization.

From the same viewpoint, the temperature at which the all-solid-state battery 70 is constrained from outside is preferably 20°C or more, and more preferably 40°C or more, while it is preferably 200°C or less, and more preferably 150°C or less. Preferred ranges include from about 20 to 200°C, from about 20 to 150°C, from about 40 to 200°C, and from about 20 to 150°C.

While the shape of the all-solid-state battery 70 of the present disclosure is not limited, it is preferably a rectangular shape in plan view, as shown in the schematic diagram of Fig. 3, for example. Furthermore, the ratio of the length of a first side of the all-solid-state battery 70 with a rectangular shape in plan view to the length of a second side perpendicular to the first side (length of the first side : length of the second side) is preferably about 1:1 to 1:5, and more preferably about 1:1 to 1:3. If the length of the second side relative to the first side is excessively long, when molding the packaging material 10 to form the below-described molded region M, it is difficult for the second side to be fixed to a mold die, and the R value (radius of curvature) of the ridge region (below-described first curved region) along the second side of the molded region M tends to be excessively large.

As shown in the schematic diagrams of Figs. 1 to 3, in the all-solid-state battery 70 of the present disclosure, the battery element is preferably housed in the molded region M with a rectangular shape in plan view, which is formed such that the packaging material 10 protrudes from the heat-sealable resin layer 4 side to the barrier layer 3 side. Fig. 1 shows a diagram in which the molded region M is formed on one side of the all-solid-state battery 70. Fig. 2 shows a diagram in which the molded region M is formed on both sides of the all-solid-state battery 70.

In the all-solid-state battery of the present disclosure, for the purpose of minimizing the dead space inside the battery, and increasing the volumetric energy density, it is preferred that, as illustrated in Fig. 3, when the first side parallel to the y direction of the all-solid-state battery with a rectangular shape in plan view is a short side, and the second side parallel to the z direction is a long side, the R value (radius of curvature) at a first curved region R1z along the short side parallel to the y direction where a terminal of the all-solid-state battery with a rectangular shape in plan view is mounted is greater than the R value (radius of curvature) at a first curved region R1y along the long side parallel to the z direction.

In the present disclosure, the R value (radius of curvature) at each of the first curved region R1 and the second curved region R2 is the R value (radius of curvature) on the surface of the barrier layer 3 side of the packaging material 10 (that is, on the outer surface side of the packaging material 10, such as the sections enclosed by the dashed lines in Fig. 2).

### 3. Layers Forming All-Solid-State Battery Packaging Material

The packaging material 10 of the present disclosure comprises a laminate comprising at least the base material layer 1, the barrier layer 3, and the heat-sealable resin layer 4 in this order from an outer side. Each of the layers constituting the packaging material 10 of the present disclosure will be hereinafter described in detail.

### [Base Material Layer 1]

In the present disclosure, the base material layer 1 is a layer provided on an outer side of the barrier layer 3 (or on an outer side of the below-described barrier layer protective film 3b, if it is present) for the purpose of, for example, functioning as a base material of the packaging material 10. The base material layer 1 is positioned as the outermost layer of the packaging material 10.

In the present disclosure, a value obtained by dividing a stress (MPa) at 2% stretching by a stress (MPa) at a rupture point, as measured using a method as specified in the test method for tensile properties of JIS K7127:1999, in at least one of MD and TD directions of the base material layer 1, is 0.25 or less. That is, in the all-solid-state battery packaging material 10 of the present disclosure, a resin film with a higher elongation than that of a resin film used in a base material layer of a conventional power storage device packaging material is used as the resin film constituting the base material layer 1. These properties of the resin film constituting the base material layer 1 can be adjusted by adjusting the composition, backbone, dispersibility, molecular weight, melting point, and MFR of the resin, as well as the conditions for a T-die, inflation, and the like (for example, heating temperature, heating rate, cooling temperature, cooling rate, heat treatment temperature, extrusion width from the T-die, stretching ratio, stretching rate, and heat treatment temperature) in the production of the base material layer 1.

From the viewpoint of achieving the effect of the present disclosure more satisfactorily, a tensile rupture elongation of the base material layer 1 (tensile rupture elongation of the resin film constituting the base material layer 1) is preferably 60% or more, more preferably 70% or more, and still more preferably 80% or more, in at least one of the MD and TD directions; an average of the tensile rupture elongations in the MD and TD is preferably 60% or more, more preferably 70% or more, and still more preferably 80% or more; and both the tensile rupture elongations in the MD and TD are preferably 60% or more, more preferably 70% or more, and still more preferably 80% or more. On the other hand, the tensile rupture elongation of the base material layer 1 is, for example, 500% or less, 300% or less, 250% or less, 150% or less, or 120% or less, and both the tensile rupture elongations in the MD and TD are particularly preferably 120% or less. Preferred ranges of the tensile rupture elongation include from about 60 to 500%, from about 60 to 300%, from about 60 to 250%, from about 60 to 150%, from about 60 to 120%, from about 70 to 500%, from about 70 to 300%, from about 70 to 250%, from about 70 to 150%, from about 70 to 120%, from about 80 to 500%, from about 80 to 300%, from about 80 to 250%, from about 80 to 150%, and from about 80 to 120%. Both the tensile rupture elongations in the MD and TD are particularly preferably about 60 to 120%, about 70 to 120%, or about 80 to 120%.

While the value obtained by dividing a stress (MPa) at 2% stretching by a stress (MPa) at a rupture point of the base material layer 1 (resin film constituting the base material layer 1), in at least one of MD and TD directions, may be any value in the range of 0.25 or less, it is preferably 0.24 or less, more preferably 0.23 or less, and still more preferably 0.20 or less, from the viewpoint of achieving the effect of the present disclosure more satisfactorily. From the same viewpoint, the value is preferably 0.01 or more, more preferably 0.02 or more, and still more preferably 0.03 or more. Preferred ranges of the value include from about 0.01 to 0.25, from about 0.01 to 0.24, from about 0.01 to 0.23, from about 0.01 to 0.20, from about 0.02 to 0.25, from about 0.02 to 0.24, from about 0.02 to 0.23, from about 0.02 to 0.20, from about 0.03 to 0.25, from about 0.03 to 0.24, from about 0.03 to 0.23, and from about 0.03 to 0.20.

From the same viewpoint, the value obtained by dividing a stress (MPa) at 2% stretching by a stress (MPa) at a rupture point of the base material layer 1 (resin film constituting the base material layer 1), in both the MD and TD directions, is preferably 0.38 or less, more preferably 0.37 or less, and still more preferably 0.36 or less. From the same viewpoint, the value is preferably 0.01 or more, more preferably 0.02 or more, and still more preferably 0.03 or more. Preferred ranges of the value include from about 0.01 to 0.38, from about 0.01 to 0.37, from about 0.01 to 0.36, from about 0.02 to 0.38, from about 0.02 to 0.37, from about 0.02 to 0.36, from about 0.03 to 0.38, from about 0.03 to 0.37, and from about 0.03 to 0.36.

From the same viewpoint, an average value in the MD and TD of the values obtained by dividing a stress (MPa) at 2% stretching by a stress (MPa) at a rupture point of the base material layer 1 (resin film constituting the base material layer 1) is preferably about 0.20 to 0.36, more preferably about 0.22 to 0.34, still more preferably about 0.24 to 0.32, and even more preferably about 0.26 to 0.30.

The value obtained by dividing a stress (MPa) at 2% stretching by a stress (MPa) at a rupture point of the base material layer 1 (resin film constituting the base material layer 1) is preferably smaller in the TD than in the MD.

The tensile test for the base material layer 1 is performed using the following method.

### [Tensile Test for Base Material Layer]

In each of the MD and TD directions of the resin film used as the base material layer, the tensile rupture elongation, the stress (MPa) at 2% stretching, and the stress (MPa) at a rupture point are measured using a method as specified in the test method for tensile properties of JIS K7127:1999. A commercial product (for example, AG-Xplus (trade name) manufactured by Shimadzu Corporation) is used as a tensile testing machine. The test sample is dumbbell-shaped as specified in JIS-K 6251-7, the gauge length is 15 mm, the tensile speed is 50 mm/min, and the test environment is 23 °C. Each measurement value is an average value of three measurements in each of the MD direction and TD direction. In a graph obtained from this test (horizontal axis: strain (%); vertical axis: stress (MPa)), the point at which the test sample ruptures is defined as the rupture point, and a value obtained by dividing the stress (MPa) at 2% stretching by the stress (MPa) at the rupture point (stress at 2% stretching/stress at the rupture point) is calculated. The tensile rupture elongation is the elongation (strain) (%) at the rupture point of the test sample.

The material forming the base material layer 1 is not limited as long as it functions as a base material, that is, has at least insulation properties, and satisfies the above-described relationship between the stress (MPa) at 2% stretching and the stress (MPa) at the rupture point. The base material layer 1 may be formed of a resin film, which may contain additives as described below.

The base material layer 1 may be formed, for example, by using a resin film formed of a resin, or by applying a resin to form a resin film at the time of formation of the base material layer 1. The resin film may be an unstretched film or a stretched film. Examples of the stretched film include a uniaxially stretched film and a biaxially stretched film, with a biaxially stretched film being preferred. Examples of stretching methods for forming a biaxially stretched film include a sequential biaxial stretching method, an inflation method, and a simultaneous biaxial stretching method. Examples of methods of applying the resin include a roll coating method, a gravure coating method, and an extrusion coating method.

Examples of the resin forming the base material layer 1 include resins such as polyesters, polyamides, polyolefins, epoxy resins, acrylic resins, fluororesins, polyurethanes, silicone resins, and phenol resins, as well as modified resins thereof. The resin forming the base material layer 1 may also be a copolymer of these resins or a modified copolymer thereof. The resin forming the base material layer 1 may also be a mixture of these resins.

Preferred among the above as the resin forming the base material layer 1 are, for example, polyesters and polyamides, with polyesters being more preferred.

Specific examples of polyesters include polyethylene terephthalate, polybutylene terephthalate, polyethylene naphthalate, polybutylene naphthalate, polyethylene isophthalate, and copolyesters. Of the above, polyethylene terephthalate is preferred. Examples of copolyesters include copolyesters containing ethylene terephthalate as a main repeating unit. Specific examples of these copolyesters include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used alone or in combination.

Specific examples of polyamides include aliphatic polyamides, such as nylon 6, nylon 66, nylon 610, nylon 12, nylon 46, and copolymers of nylon 6 and nylon 66; polyamides containing aromatics, such as hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polyamide MXD6 (polymethaxylylene adipamide); cycloaliphatic polyamides, such as polyamide PACM6 (polybis(4-aminocyclohexyl)methane adipamide); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

The base material layer 1 preferably contains at least one of a polyester film, a polyamide film, and a polyolefin film, more preferably contains at least one of a stretched polyester film, a stretched polyamide film, and a stretched polyolefin film, still more preferably contains at least one of a stretched polyethylene terephthalate film, a stretched polybutylene terephthalate film, a stretched nylon film, and a stretched polypropylene film, even more preferably contains at least one of a biaxially stretched polyethylene terephthalate film, a biaxially stretched polybutylene terephthalate film, a biaxially stretched nylon film, and a biaxially stretched polypropylene film, and still more preferably contains biaxially stretched polyethylene terephthalate.

The base material layer 1 may be a single layer, or may be composed of two or more layers. When the base material layer 1 is composed of two or more layers, it may be a laminate in which resin films are laminated with an adhesive or the like, or may be a laminate of two or more layers of resin films formed by co-extruding resins. The laminate of two or more layers of resin films formed by co-extruding resins may be used in an unstretched state as the base material layer 1, or may be uniaxially or biaxially stretched and used as the base material layer 1. When the base material layer 1 is a single layer, it is preferably composed of a single layer of a polyester (particularly polyethylene terephthalate). When the base material layer 1 is composed of a plurality of layers, the base material layer 1 as a whole preferably satisfies the above-described physical properties.

Specific examples of laminates of two or more layers of resin films for the base material layer 1 include a laminate of a polyester film and a nylon film, a laminate of two or more layers of nylon films, and a laminate of two or more layers of polyester films. Preferred are a laminate of a stretched nylon film and a stretched polyester film, a laminate of two or more layers of stretched nylon films, and a laminate of two or more layers of stretched polyester films. For example, when the base material layer 1 is a laminate of two layers of resin films, it is preferably a laminate of a polyester film and a polyester film, a laminate of a polyamide resin film and a polyamide resin film, or a laminate of a polyester film and a polyamide resin film, and more preferably a laminate of a polyethylene terephthalate film and a polyethylene terephthalate film, a laminate of a nylon film and a nylon film, or a laminate of a polyethylene terephthalate film and a nylon film.

When the base material layer 1 is a laminate of two or more layers of resin films, the two or more layers of resin films may be laminated with an adhesive therebetween. Examples of preferred adhesives are the same adhesives as those exemplified for the adhesive agent layer 2 described below. The method of laminating two or more layers of resin films is not limited, and may be any of known methods, for example, a dry lamination method, a sandwich lamination method, an extrusion lamination method, and a thermal lamination method, preferably a dry lamination method. When the lamination is performed using a dry lamination method, a polyurethane adhesive is preferably used as an adhesive. In this case, the thickness of the adhesive is, for example, about 2 to 5 µm. An anchor coat layer may also be formed and laminated on the resin films. Examples of the anchor coat layer are the same adhesives as those exemplified for the adhesive agent layer 2 described below. In this case, the thickness of the anchor coat layer is, for example, about 0.01 to 1.0 µm.

At least one of the surface and the inside of the base material layer 1 may contain additives, such as lubricants, flame retardants, anti-blocking agents, antioxidants, light stabilizers, tackifiers, and anti-static agents. A single additive may be used alone, or a mixture of two or more additives may be used.

In the present disclosure, it is preferred that a lubricant is present on the surface of the base material layer 1, from the viewpoint of improving the moldability of the packaging material 10. While the lubricant is not limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combination.

When a lubricant is present on the surface of the base material layer 1, the amount of the lubricant present is not limited, but is preferably about 3 mg/m² or more, more preferably about 4 to 15 mg/m², and still more preferably about 5 to 14 mg/m².

The lubricant present on the surface of the base material layer 1 may be exuded from the lubricant contained in the resin forming the base material layer 1, or may be applied to the surface of the base material layer 1.

While the thickness of the base material layer 1 is not limited as long as the function as a base material is exhibited, it is, for example, about 3 to 50 µm, and preferably about 10 to 35 µm. When the base material layer 1 is a laminate of two or more layers of resin films, the thickness of the resin film forming each layer is preferably about 2 to 25 µm.

### [Adhesive Agent Layer 2]

In the packaging material 10, the adhesive agent layer 2 is a layer that is optionally provided between the base material layer 1 and the barrier layer 3, for the purpose of improving the adhesiveness between these layers.

The adhesive agent layer 2 is formed of an adhesive capable of bonding the base material layer 1 and the barrier layer 3. While the adhesive used for forming the adhesive agent layer 2 is not limited, it may be any of a chemical reaction type, a solvent volatilization type, a heat melting type, a heat pressing type, and the like. The adhesive may also be a two-liquid curable adhesive (two-liquid adhesive), a one-liquid curable adhesive (one-liquid adhesive), or a resin that does not involve a curing reaction. The adhesive agent layer 2 may be composed of a single layer or a plurality of layers.

Specific examples of adhesive components contained in the adhesive include polyesters, such as polyethylene terephthalate, polybutylene terephthalate, polyethylene naphthalate, polybutylene naphthalate, polyethylene isophthalate, and copolyesters; polyethers; polyurethanes; epoxy resins; phenol resins; polyamides, such as nylon 6, nylon 66, nylon 12, and copolyamides; polyolefin-based resins, such as polyolefins, cyclic polyolefins, acid-modified polyolefins, and acid-modified cyclic polyolefins; polyvinyl acetates; celluloses; (meth)acrylic resins; polyimides; polycarbonates; amino resins, such as urea resins and melamine resins; rubbers, such as chloroprene rubber, nitrile rubber, and styrene-butadiene rubber; and silicone resins. These adhesive components may be used alone or in combination. Preferred among these adhesive components is a polyurethane adhesive, for example. Moreover, the resin that serves as an adhesive component can be used in combination with an appropriate curing agent to improve the adhesive strength. The curing agent is appropriately selected from a polyisocyanate, a polyfunctional epoxy resin, an oxazoline group-containing polymer, a polyamine resin, an acid anhydride, and the like, depending on the functional group of the adhesive component.

The polyurethane adhesive may be, for example, a polyurethane adhesive that contains a first agent containing a polyol compound and a second agent containing an isocyanate compound. The polyurethane adhesive is preferably a two-liquid curable polyurethane adhesive containing a polyol such as a polyester polyol, a polyether polyol, or an acrylic polyol as the first agent, and an aromatic or aliphatic polyisocyanate as the second agent. The polyurethane adhesive may also be, for example, a polyurethane adhesive that contains a polyurethane compound obtained beforehand by reacting a polyol compound and an isocyanate compound, and an isocyanate compound. The polyurethane adhesive may also be, for example, a polyurethane adhesive that contains a polyurethane compound obtained beforehand by reacting a polyol compound and an isocyanate compound, and a polyol compound. The polyurethane adhesive may also be, for example, a polyurethane adhesive produced by curing a polyurethane compound obtained beforehand by reacting a polyol compound and an isocyanate compound, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. When the adhesive agent layer 2 is formed of a polyurethane adhesive, the power storage device packaging material is provided with excellent electrolytic solution resistance, which prevents the base material layer 1 from peeling off even if the electrolytic solution adheres to the side surface.

Alternatively, the adhesive agent layer 2 is preferably formed of a cured product of a resin composition containing at least one of a polyester and a polycarbonate, and at least one of an alicyclic isocyanate compound and an aromatic isocyanate compound, as with the below-described adhesive layer 5.

The adhesive agent layer 2 may be blended with other components as long as they do not interfere with adhesiveness, and may contain colorants, thermoplastic elastomers, tackifiers, fillers, and the like. When the adhesive agent layer 2 contains a colorant, the power storage device packaging material can be colored. The colorant may be any of known colorants, such as a pigment or a dye. A single colorant may be used, or a mixture of two or more colorants may be used.

The pigment is not limited in type as long as it does not interfere with the adhesiveness of the adhesive agent layer 2. Examples of organic pigments include azo-based, phthalocyanine-based, quinacridone-based, anthraquinone-based, dioxazine-based, indigo/thioindigo-based, perinone-perylene-based, isoindolenine-based, and benzimidazolone-based pigments. Examples of inorganic pigments include carbon black-based, titanium oxide-based, cadmium-based, lead-based, chromium oxide-based, and iron-based pigments. Other examples include mica powder and fish scale flakes.

Among these colorants, carbon black is preferred, in order to make the external appearance of the power storage device packaging material black, for example.

The average particle diameter of the pigment is not limited, and may be, for example, about 0.05 to 5 µm, and preferably about 0.08 to 2 µm. The average particle diameter of the pigment is the median diameter as measured using a laser diffraction/scattering particle size distribution analyzer.

The pigment content in the adhesive agent layer 2 is not limited as long as the power storage device packaging material is colored; for example, it is about 5 to 60% by mass, and preferably 10 to 40% by mass.

While the thickness of the adhesive agent layer 2 is not limited as long as the base material layer 1 and the barrier layer 3 can be bonded, it is, for example, about 1 µm or more or about 2 µm or more. On the other hand, the thickness of the adhesive agent layer 2 is, for example, about 10 µm or less or about 5 µm or less. Preferred ranges of the thickness of the adhesive agent layer 2 include from about 1 to 10 µm, from about 1 to 5 µm, from about 2 to 10 µm, and from about 2 to 5 µm.

### [Coloring Layer]

A coloring layer (not illustrated) is a layer that is optionally provided between the base material layer 1 and the barrier layer 3. When the adhesive agent layer 2 is provided, the coloring layer may be provided between the base material layer 1 and the adhesive agent layer 2 or between the adhesive agent layer 2 and the barrier layer 3. Alternatively, the coloring layer may be provided on an outer side of the base material layer 1. The power storage device packaging material can be colored by providing the coloring layer.

The coloring layer can be formed, for example, by applying an ink containing a colorant to the surface of the base material layer 1 or the surface of the barrier layer 3. The colorant may be any of known colorants, such as a pigment or a dye. A single colorant may be used, or a mixture of two or more colorants may be used.

Specific examples of the colorant contained in the coloring layer are the same as those exemplified in the [Adhesive Agent Layer 2] section.

### [Barrier Layer 3]

In the packaging material 10, the barrier layer 3 is a layer that at least prevents the ingress of moisture.

The barrier layer 3 may be, for example, a metal foil, a vapor-deposited film, or a resin layer having barrier properties. Examples of the vapor-deposited film include a vapor-deposited metal film, a vapor-deposited inorganic oxide film, and a vapor-deposited carbon-containing inorganic oxide film. Examples of the resin layer include fluorine-containing resins, such as polyvinylidene chloride, polymers containing chlorotrifluoroethylene (CTFE) as a main component, polymers containing tetrafluoroethylene (TFE) as a main component, polymers with fluoroalkyl groups, and polymers with fluoroalkyl units as a main component; and ethylene-vinyl alcohol copolymers. The barrier layer 3 may also be, for example, a resin film having at least one of these vapor-deposited films and resin layers. A plurality of barrier layers 3 may be provided. The barrier layer 3 preferably includes a layer formed of a metal material. Specific examples of metal materials constituting the barrier layer 3 include aluminum alloys, stainless steel, titanium steel, and steel sheets. When the barrier layer 3 is a metal foil, it preferably includes at least one of an aluminum alloy foil and a stainless steel foil.

The aluminum alloy foil is more preferably a soft aluminum alloy foil formed of an annealed aluminum alloy, for example, from the viewpoint of improving the moldability of the packaging material 10, and is more preferably an aluminum alloy foil containing iron, from the viewpoint of further improving the moldability. In the aluminum alloy foil (100% by mass) containing iron, the iron content is preferably 0.1 to 9.0% by mass, and more preferably 0.5 to 2.0% by mass. When the iron content is 0.1% by mass or more, the packaging material can be provided with superior moldability. When the iron content is 9.0% by mass or less, the packaging material can be provided with superior flexibility. Examples of soft aluminum alloy foils include aluminum alloy foils having the compositions as specified in JIS H4160: 1994 A8021 H-O, JIS H4160: 1994 A8079 H-O, JIS H4000: 2014 A8021 P-O, and JIS H4000: 2014 A8079 P-O. These aluminum alloy foils may be optionally blended with silicon, magnesium, copper, manganese, and the like. The softening may be performed by annealing, for example.

Examples of the stainless steel foil include austenitic, ferritic, austenitic-ferritic, martensitic, and precipitation-hardening stainless steel foils. The stainless steel foil is preferably formed of an austenitic stainless steel, from the viewpoint of providing the packaging material 10 with superior moldability.

Specific examples of the austenitic stainless steel constituting the stainless steel foil include SUS304, SUS301, and SUS316L, with SUS304 being particularly preferred.

The thickness of the barrier layer 3 when it is a metal foil may be in a range in which at least the function of the barrier layer to prevent the ingress of moisture is exhibited, and may be, for example, about 9 to 200 µm. The thickness of the barrier layer 3 is, for example, preferably about 85 µm or less, more preferably about 50 µm or less, still more preferably about 40 µm or less, and particularly preferably about 35 µm or less; while it is preferably about 10 µm or more, more preferably about 20 µm or more, and still more preferably about 25 µm or more; and preferred ranges of the thickness include from about 10 to 85 µm, from about 10 to 50 µm, from about 10 to 40 µm, from about 10 to 35 µm, from about 20 to 85 µm, from about 20 to 50 µm, from about 20 to 40 µm, from about 20 to 35 µm, from about 25 to 85 µm, from about 25 to 50 µm, from about 25 to 40 µm, and from about 25 to 35 µm. When the barrier layer 3 is formed of an aluminum alloy foil, the above-defined ranges are particularly preferred, with the range of about 25 to 85 µm or about 25 to 50 µm being particularly preferred. In particular, when the barrier layer 3 is formed of a stainless steel foil, the thickness of the stainless steel foil is preferably about 60 µm or less, more preferably about 50 µm or less, still more preferably about 40 µm or less, even more preferably about 30 µm or less, and particularly preferably about 25 µm or less; while it is preferably about 10 µm or more, and more preferably about 15 µm or more; and preferred ranges of the thickness include from about 10 to 60 µm, from about 10 to 50 µm, from about 10 to 40 µm, from about 10 to 30 µm, from about 10 to 25 µm, from about 15 to 60 µm, from about 15 to 50 µm, from about 15 to 40 µm, from about 15 to 30 µm, and from about 15 to 25 µm.

### [Barrier Layer Protective Films 3a and 3b]

In the packaging material 10, a barrier layer protective film 3a is optionally provided on the heat-sealable resin layer 4 side surface of the barrier layer 3. In the packaging material 10, the barrier layer protective film 3a may be provided only on the heat-sealable resin layer 4 side surface of the barrier layer 3, or barrier layer protective films 3a and 3b may be provided on both surfaces of the barrier layer 3. In the all-solid-state battery 70 of the present disclosure, the barrier protective film 3a is preferably provided on the heat-sealable resin layer side surface. From the viewpoint of improving the adhesion of the barrier layer 3, the barrier protective films 3a and 3b are preferably provided on both surfaces of the barrier layer.

In the all-solid-state battery 70 of the present disclosure, when the barrier layer protective film 3a of the packaging material 10 is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is preferably in the range of 6 to 120.

To prevent delamination between the solid electrolyte and the negative electrode active material layer or the positive electrode active material layer in an all-solid-state battery, the all-solid-state battery may be constrained by high-pressure pressing from outside the packaging material. However, when the solid electrolyte and the negative electrode active material layer or the positive electrode active material layer are constrained under a high pressure from outside the packaging material of the all-solid-state battery, there is a possibility that the heat-sealable resin layer of the packaging material may be strongly pressed against the battery element, which reduces the thickness of the heat-sealable resin layer (inner layer) of the packaging material, leading to contact between the barrier layer laminated on the packaging material and the solid electrolyte. In particular, if an electric current flows between the barrier layer of the packaging material and the solid electrolyte while in contact with each other, an alloy forms on the surface of the barrier layer, leading to deterioration of the barrier layer. In contrast, in the all-solid-state battery 70 of the present disclosure, the barrier layer protective film 3a is provided on the surface of the barrier layer 3 of the packaging material 10, and therefore, when the all-solid-state battery 70 is constrained under a high pressure, even if an electric current flows between the barrier layer 3 and the solid electrolyte layer 40 while the solid electrolyte extends through the heat-sealable resin layer 4 and the adhesive layer 5, an alloy is unlikely to form on the surface of the barrier layer 3, which effectively prevents deterioration of the barrier layer 3. In particular, when the peak intensity ratio P_{PO3/CrPO4} of the barrier layer protective film 3a is in the range of 6 to 120, the formation of an alloy on the surface of the barrier layer 3 is more effectively prevented, and deterioration of the barrier layer 3 is even more effectively prevented.

In the present disclosure, the lower limit of the P_{PO3/CrPO4} ratio of peak intensity P_{PO3} derived from PO₃⁻ to peak intensity P_{CrPO4} derived from CrPO₄⁻ is preferably about 10 or more, while the upper limit is preferably about 115 or less, more preferably about 110 or less, and still more preferably about 50 or less. Preferred ranges of the P_{PO3/CrPO4} ratio include from about 6 to 120, from about 6 to 115, from about 6 to 110, from about 6 to 50, from about 10 to 120, from about 10 to 115, from about 10 to 110, and from about 10 to 50, with the range of about 10 to 50 being more preferred, and the range of about 25 to 32 being particularly preferred.

Moreover, in the present disclosure, when the barrier layer protective film is analyzed using time-of-flight secondary ion mass spectrometry, a P_{PO2/CrPO4} ratio of peak intensity P_{PO2} derived from PO₂⁻ to peak intensity P_{CrPO4} derived from CrPO₄⁻ is preferably in the range of 7 to 70.

The P_{PO2/CrPO4} ratio of peak intensity P_{PO2} derived from PO₂⁻ to peak intensity P_{CrPO4} derived from CrPO₄⁻ is preferably in the range of 7 to 70. From the viewpoint of effectively preventing deterioration of the barrier layer 3, the lower limit of the P_{PO2/CrPO4} ratio is preferably about 10 or more, while the upper limit is preferably about 65 or less, and more preferably about 50 or less. Preferred ranges of the P_{PO2/CrPO4} ratio include from about 7 to 70, from about 7 to 65, from about 7 to 50, from about 10 to 70, from about 10 to 65, and from about 10 to 50, with the range of about 10 to 50 being more preferred, and the range of about 15 to 37 being particularly preferred.

In the present disclosure, when the barrier layer protective films 3a and 3b are provided on both surfaces of the barrier layer 3, the peak intensity ratio P_{PO3/CrPO4} is preferably in the above-defined range for both the barrier layer protective films 3a and 3b, and likewise, P_{PO2/CrPO4} is preferably in the above-defined range.

Specifically, the method of analyzing the barrier layer protective film 3a, 3b using time-of-flight secondary ion mass spectrometry may be performed using a time-of-flight secondary ion mass spectrometer, under the following measurement conditions:

### (Measurement Conditions)

Primary ion: doubly charged ion of bismuth cluster (Bi₃⁺⁺)
Primary ion acceleration voltage: 30 kV
Mass range (m/z): 0-1500
Measurement range: 100 µm × 100 µm
Number of scans: 16 scans/cycle
Number of pixels (per side): 256 pixels
Etching ion: Ar gas cluster ion beam (Ar-GCIB)
Etching ion acceleration voltage: 5.0 kV

The presence of chromium in the barrier layer protective film can be confirmed using X-ray photoelectron spectroscopy. The specific procedure is as follows: First, in the packaging material, the layer (such as the adhesive agent layer, the heat-sealable resin layer, or the adhesive layer) laminated on the barrier layer is physically peel off. Then, the barrier layer is placed in an electric furnace at about 300°C for about 30 minutes to remove organic components present on the surface of the barrier layer. Subsequently, X-ray photoelectron spectroscopy of the surface of the barrier layer is used to confirm the presence of chromium.

The barrier layer protective film 3a, 3b can be formed by subjecting a surface of the barrier layer 3 to chemical conversion treatment with a treatment solution containing a chromium compound, such as chromium oxide.

An example of a method of the chemical conversion treatment with a treatment solution containing a chromium compound is, for example, to apply a chromium compound such as chromium oxide dispersed in phosphoric acid and/or a salt thereof to a surface of the barrier layer 3, and perform baking treatment, thereby forming a barrier layer protective film on the surface of the barrier layer 3.

The peak intensity ratio P_{PO3/CrPO4} of the barrier layer protective film 3a, 3b as well as the peak intensity ratio P_{PO2/CrPO4} can each be adjusted by, for example, adjusting the composition of the treatment solution for forming the barrier layer protective film 3a, 3b, production conditions such as the temperature and time of the baking treatment after the treatment, and the like.

In the treatment solution containing a chromium compound, the proportion of the phosphoric acid and/or salt thereof to the chromium compound is not limited; however, from the viewpoint of setting the peak intensity ratio P_{PO3/CrPO4} and also the peak intensity ratio P_{PO2/CrPO4} in the above-defined respective ranges, the proportion of the phosphoric acid and/or salt thereof is preferably about 30 to 120 parts by mass, and more preferably about 40 to 110 parts by mass, per 100 parts by mass of the chromium compound. The phosphoric acid and salt thereof may be, for example, condensed phosphoric acid and a salt thereof.

The treatment solution containing a chromium compound may further contain an anionic polymer and a crosslinking agent for crosslinking the anionic polymer. Examples of the anionic polymer include a copolymer that contains, as a main component, poly(meth)acrylic acid or a salt thereof, or (meth)acrylic acid or a salt thereof. Examples of the crosslinking agent include a silane coupling agent and a compound having, as a functional group, any of an isocyanate group, a glycidyl group, a carboxyl group, and an oxazoline group. A single anionic polymer or two or more anionic polymers may be used, and likewise, a single crosslinking agent or two or more crosslinking agents may be used.

From the viewpoint of effectively preventing deterioration of the barrier layer 3, the treatment solution containing a chromium compound preferably contains an aminated phenol polymer or an acrylic resin. When the treatment solution containing a chromium compound contains an aminated phenol polymer, the content of the aminated phenol polymer is preferably about 100 to 400 parts by mass, and more preferably about 200 to 300 parts by mass, per 100 parts by mass of the chromium compound. The weight average molecular weight of the aminated phenol polymer is preferably about 5,000 to 20,000. The weight average molecular weight of the aminated phenol polymer is the value as measured by gel permeation chromatography (GPC), measured under conditions using polystyrene as standard samples.

The acrylic resin is preferably polyacrylic acid, an acrylic acid-methacrylic acid ester copolymer, an acrylic acid-maleic acid copolymer, an acrylic acid-styrene copolymer, or a derivative thereof, such as a sodium, ammonium, or amine salt. In particular, the acrylic resin is preferably a derivative of polyacrylic acid, such as an ammonium, sodium, or amine salt of polyacrylic acid. As used herein, the term polyacrylic acid refers to a polymer of acrylic acid. Alternatively, the acrylic resin is preferably a copolymer of acrylic acid with a dicarboxylic acid or a dicarboxylic anhydride, or preferably an ammonium, sodium, or amine salt of the copolymer of acrylic acid with a dicarboxylic acid or a dicarboxylic anhydride. A single acrylic resin may be used alone, or a mixture of two or more acrylic resins may be used.

The weight average molecular weight of the acrylic resin is preferably about 1,000 to 1,000,000, more preferably about 3,000 to 800,000, and still more preferably about 10,000 to 800,000. A higher molecular weight increases the durability, but reduces the water solubility of the acrylic resin, which makes the coating solution unstable, leading to a lack of production stability. Conversely, a lower molecular weight reduces the durability. In the present disclosure, an acrylic resin having a weight average molecular weight of 1,000 or more achieves high durability, while an acrylic resin having a weight average molecular weight of 1,000,000 or less achieves good production stability. As used herein, the weight average molecular weight of the acrylic resin is the value as measured by gel permeation chromatography (GPC), measured under conditions using polystyrene as standard samples.

The acrylic resin preferably has a higher acid value, because it is believed that the larger the number of COOH groups, the higher the effect of contributing to the adhesiveness. However, when the acrylic resin is in the form of a salt as described above, the acid value may not reflect the number of O-C=O bonds; thus, it is believed that analyzing O-C=O bonds from the XPS spectrum as disclosed herein can better reflect the adhesiveness.

When the treatment solution containing a chromium compound contains an acrylic resin, the content of the acrylic resin is preferably about 50 to 400 parts by mass, and more preferably about 80 to 200 parts by mass, per 100 parts by mass of the chromium compound.

From the same the viewpoint, the chromium compound is preferably at least one of chromium(III) fluoride and chromium(III) nitrate. The chromium compound is believed to form a coordinative crosslinked structure whose center is a Cr atom and a highly durable film structure with an aluminum fluoride.

The solvent for the treatment solution containing a chromium compound is not limited as long as it can disperse the components contained in the treatment solution and can then be evaporated by heating; however, the solvent is preferably water.

While the solids concentration of the chromium compound contained in the treatment solution for forming the barrier layer protective film 3a, 3b is not limited, it is, for example, about 1 to 15% by mass, preferably about 7.0 to 12.0% by mass, more preferably about 8.0 to 11.0% by mass, and still more preferably about 9.0 to 10.0% by mass, from the viewpoint of setting the peak intensity ratio P_{PO3/CrPO4} and also the peak intensity ratio P_{PO2/CrPO4} in the above-defined respective predetermined ranges to effectively prevent deterioration of the barrier layer 3.

While the thickness of the barrier layer protective film 3a, 3b is not limited, it is preferably about 1 nm to 10 µm, more preferably about 1 to 100 nm, and still more preferably about 1 to 50 nm, from the viewpoint of effectively preventing deterioration of the barrier layer 3. The thickness of the barrier layer protective film can be measured by observation with a transmission electron microscope, or using a combination of observation with a transmission electron microscope and energy dispersive X-ray spectroscopy or electron energy-loss spectroscopy.

From the same viewpoint, the amount of the barrier layer protective film 3a, 3b per m² of the surface of the barrier layer 3 is preferably about 1 to 500 mg, more preferably about 1 to 100 mg, and still more preferably about 1 to 50 mg.

Examples of methods of applying the treatment solution containing a chromium compound to the surface of the barrier layer include a bar coating method, a roll coating method, a gravure coating method, and an immersion method.

From the viewpoint of setting the peak intensity ratio P_{PO3/CrPO4} and also the peak intensity ratio P_{PO2/CrPO4} in the above-defined respective predetermined ranges to effectively prevent deterioration of the barrier layer 3, the heating temperature for baking the treatment solution into the barrier layer protective film is preferably about 170 to 250°C, more preferably about 180 to 230°C, and still more preferably about 190 to 220°C. From the same viewpoint, the baking time is preferably about 2 to 10 seconds, and more preferably about 3 to 6 seconds.

From the viewpoint of more efficiently performing the chemical conversion treatment of a surface of the barrier layer 3, it is preferred that prior to forming the barrier layer protective film 3a, 3b on the surface of the barrier layer 3, degreasing treatment is performed using a known treatment method, such as an alkali immersion method, an electrolytic cleaning method, an acid cleaning method, an electrolytic acid cleaning method, or an acid activation method.

### [Heat-Sealable Resin Layer 4]

In the all-solid-state battery packaging material 10 of the present disclosure, the heat-sealable resin layer 4 corresponds to the innermost layer, and is a layer (sealant layer) that exhibits the function of hermetically sealing the battery element upon heat-sealing the heat-sealable resin layers 4 to each other during the assembly of an all-solid-state battery. Examples of methods of heat-sealing the heat-sealable resin layers 4 to each other include bar sealing, hot plate sealing, rotary roll sealing, belt sealing, impulse sealing, high-frequency sealing, and ultrasonic sealing.

In the all-solid-state battery packaging material 10 of the present disclosure, the heat-sealable resin layer 4 may be formed of a heat-sealable resin. Examples of the resin forming the heat-sealable resin layer 4 include polyolefins, such as polypropylene and polyethylene, acid-modified polyolefins, such as acid-modified polypropylene and acid-modified polyethylene, and polybutylene terephthalate. Among the above, polybutylene terephthalate has excellent heat resistance; thus, in the all-solid-state battery packaging material 10 of the present disclosure, the heat-sealable resin layer 4 is preferably formed of a polybutylene terephthalate film. Moreover, when the heat-sealable resin layer 4 is formed of a polybutylene terephthalate film, the all-solid-state battery packaging material 10 of the present disclosure can exhibit a high sealing strength in a high-temperature environment. The polybutylene terephthalate film forming the heat-sealable resin layer 4 may be provided as the heat-sealable resin layer 4 by laminating a polybutylene terephthalate film prepared beforehand with the adhesive layer 5. Alternatively, the resin forming the polybutylene terephthalate film may be formed into a film by, for example, melt-extrusion or the like, and simultaneously laminated with the adhesive layer 5.

The polybutylene terephthalate film may be a stretched polybutylene terephthalate film or an unstretched polybutylene terephthalate film, preferably an unstretched polybutylene terephthalate film.

The polybutylene terephthalate film preferably contains an elastomer in addition to polybutylene terephthalate. The elastomer plays the role of increasing the flexibility of the polybutylene terephthalate film while ensuring durability in a high-temperature environment. Preferably, the elastomer is, for example, at least one thermoplastic elastomer selected from polyesters, polyamides, polyurethanes, polyolefins, polystyrenes, polyethers, and acrylics, or a thermoplastic elastomer that is a copolymer thereof. More preferably, the elastomer is, for example, a thermoplastic elastomer composed of a block copolymer of polybutylene terephthalate and a polyether, or a thermoplastic elastomer composed of an α-olefin copolymer of polymethylpentene. In the thermoplastic elastomer composed of a block copolymer of polybutylene terephthalate and a polyether, examples of the polyether component include a copolymer of terephthalic acid and polytetramethylene ether glycol. Preferred specific examples of polyether-based thermoplastic elastomers include polytetramethylene glycol and poly-epsilon-caprolactam. The elastomer content in the polybutylene terephthalate film is not limited as long as the flexibility of the polybutylene terephthalate film can be increased while ensuring durability in a high-temperature environment; for example, it is about 0.1% by mass or more, preferably about 0.5% by mass or more, more preferably about 1.0% by mass or more, and still more preferably about 3.0% by mass or more. On the other hand, the content is, for example, about 10.0% by mass or less, about 8.0% by mass or less, or about 5.0% by mass or less. Preferred ranges of the content include from about 0.1 to 10.0% by mass, from about 0.1 to 8.0% by mass, from about 0.1 to 5.0% by mass, from about 0.5 to 10.0% by mass, from about 0.5 to 8.0% by mass, from about 0.5 to 5.0% by mass, from about 1.0 to 10.0% by mass, from about 1.0 to 8.0% by mass, from about 1.0 to 5.0% by mass, from about 3.0 to 10.0% by mass, from about 3.0 to 8.0% by mass, and from about 3.0 to 5.0% by mass.

Specific examples of polyolefins include polyethylenes, such as low-density polyethylene, medium-density polyethylene, high-density polyethylene, and linear low-density polyethylene; ethylene-α-olefin copolymers; polypropylenes, such as homopolypropylene, block copolymers of polypropylene (for example, block copolymers of propylene and ethylene), and random copolymers of polypropylene (for example, random copolymers of propylene and ethylene); propylene-α-olefin copolymers; and terpolymers of ethylene-butene-propylene. Among the above, polypropylenes are preferred. When the polyolefin resin is a copolymer, it may be a block copolymer or a random copolymer. These polyolefin-based resins may be used alone or in combination. The acid-modified polyolefin is a polymer obtained by modifying the polyolefin by block polymerization or graft polymerization with an acid component. The polyolefin to be acid-modified may, for example, be the above-mentioned polyolefin, or a copolymer obtained by copolymerizing the above-mentioned polyolefin with a polar molecule, such as acrylic acid or methacrylic acid, or a polymer such as a crosslinked polyolefin. Examples of the acid component to be used for the acid modification include carboxylic acids and anhydrides thereof, such as maleic acid, acrylic acid, itaconic acid, crotonic acid, maleic anhydride, and itaconic anhydride.

The heat-sealable resin layer 4 may be formed of only one layer, or may be formed of two or more layers using an identical resin or different resins. When the heat-sealable resin layer 4 is formed of two or more layers, it is preferred that at least one layer is formed of a polybutylene terephthalate film, and the polybutylene terephthalate film is the innermost layer of the all-solid-state battery packaging material 10. The layer to be adhered to the adhesive layer 5 is preferably a polybutylene terephthalate film. When the heat-sealable resin layer 4 is formed of two or more layers, the layer(s) not formed of a polybutylene terephthalate film may be, for example, layers formed of polyolefins, such as polypropylene and polyethylene, and acid-modified polyolefins, such as acid-modified polypropylene and acid-modified polyethylene. However, the heat-sealable resin layer 4 is preferably composed of a polybutylene terephthalate film alone because, polyolefins and acid-modified polyolefins have lower durability in a high-temperature environment, as compared to polybutylene terephthalate.

From the viewpoint of achieving the effect of the present disclosure more satisfactorily, a tensile rupture strength in a 23°C environment, as measured using a method as specified in the test method for tensile properties of JIS K7127:1999, in at least one of MD and TD directions of the heat-sealable resin layer 4, is preferably about 20 MPa or more, more preferably about 30 MPa or more, and still more preferably about 50 MPa or more. On the other hand, the tensile rupture strength is preferably about 300 MPa or less, more preferably about 280 MPa or less, and still more preferably about 250 MPa or less. Preferred ranges of the tensile rupture strength include from about 20 to 300 MPa, from about 20 to 280 MPa, from about 20 to 250 MPa, from about 30 to 300 MPa, from about 30 to 280 MPa, from about 30 to 250 MPa, from about 50 to 300 MPa, from about 50 to 280 MPa, and from about 50 to 250 MPa. Moreover, a tensile rupture strength in a 120°C environment is preferably about 5 MPa or more, more preferably about 7 MPa or more, and still more preferably about 10 MPa or more. On the other hand, the tensile rupture strength is preferably about 300 MPa or less, more preferably about 250 MPa or less, and still more preferably about 220 MPa or less. Preferred ranges of the tensile rupture strength include from about 5 to 300 MPa, from about 5 to 250 MPa, from about 5 to 220 MPa, from about 7 to 300 MPa, from about 7 to 250 MPa, from about 7 to 220 MPa, from about 10 to 300 MPa, from about 10 to 250 MPa, and from about 10 to 220 MPa. Each of these tensile rupture strengths is preferably an average of the tensile rupture strengths in the MD and TD; and more preferably, both the tensile rupture strengths in the MD and TD are in the above-defined range.

Moreover, from the viewpoint of achieving the effect of the present disclosure more satisfactorily, a tensile rupture elongation at 23°C, as measured using a method as specified in the test method for tensile properties of JIS K7127:1999, in at least one of MD and TD directions of the heat-sealable resin layer 4, is preferably about 100% or more, more preferably about 200% or more, and still more preferably about 300% or more. On the other hand, the tensile rupture elongation is preferably about 2000% or less, more preferably about 1800% or less, and still more preferably about 1500% or less. Preferred ranges of the tensile rupture elongation include from about 100 to 2000%, from about 100 to 1800%, from about 100 to 1500%, from about 200 to 2000%, from about 200 to 1800%, from about 200 to 1500%, from about 300 to 2000%, from about 300 to 1800%, and from about 300 to 1500%. Moreover, a tensile rupture elongation at 120°C is preferably about 200% or more, more preferably about 250% or more, and still more preferably about 300% or more. On the other hand, the tensile rupture elongation is preferably about 1200% or less, more preferably about 1100% or less, and still more preferably about 1000% or less. Preferred ranges of the tensile rupture elongation include from about 200 to 1200%, from about 200 to 1100%, from about 200 to 1000%, from about 250 to 1200%, from about 250 to 1100%, from about 250 to 1000%, from about 300 to 1200%, from about 300 to 1100%, and from about 300 to 1000%. Each of these tensile rupture elongations is preferably an average of the tensile rupture elongations in the MD and TD; and more preferably, both the tensile rupture elongations in the MD and TD are in the above-defined range.

The tensile test for the heat-sealable resin layer 4 is performed using the following method.

### [Tensile Test for Heat-Sealable Resin Layer]

In each of the MD and TD directions of the resin film used as the heat-sealable resin layer, the tensile rupture strength and the tensile rupture elongation in a 23°C environment or a 120°C environment are measured using a method as specified in the test method for tensile properties of JIS K7127:1999. A commercial product (for example, AG-Xplus (trade name) manufactured by Shimadzu Corporation) is used as a tensile testing machine. The test sample is dumbbell-shaped as specified in JIS-K 6251-7, the gauge length is 15 mm, the tensile speed is 50 mm/min, and the test environment is 23°C or 120°C. Each measurement value is an average value of three measurements in each of the MD direction and TD direction. The tensile rupture strength is the stress (MPa) at the rupture point of the test sample. The tensile rupture elongation is the elongation (strain) (%) at the rupture point of the test sample.

The heat-sealable resin layer 4 may also optionally contain a lubricant and the like. The inclusion of a lubricant in the heat-sealable resin layer 4 can improve the moldability of the packaging material 10. The lubricant is not limited, and may be a known lubricant. A single lubricant may be used alone, or a combination of two or more lubricants may be used.

While the lubricant is not limited, it is preferably an amide-based lubricant. Specific examples of the lubricant are those exemplified for the base material layer 1. A single lubricant may be used alone, or a combination of two or more lubricants may be used.

When a lubricant is present on the surface of the heat-sealable resin layer 4, the amount of the lubricant present is not limited, but is preferably about 10 to 50 mg/m², and more preferably about 15 to 40 mg/m², from the viewpoint of improving the moldability of the packaging material.

The lubricant present on the surface of the heat-sealable resin layer 4 may be exuded from the lubricant contained in the resin forming the heat-sealable resin layer 4, or may be applied to the surface of the heat-sealable resin layer 4.

From the viewpoint of satisfactorily preventing delamination (and also achieving a high sealing strength) in a high-temperature environment of the all-solid-state battery packaging material 10, the thickness of the heat-sealable resin layer 4 is preferably 25 µm or more, more preferably 30 µm or more, still more preferably 40 µm or more, and even more preferably 50 µm or more. On the other hand, the thickness of the heat-sealable resin layer 4 is, for example, about 150 µm or less, and preferably about 120 µm or less. Preferred ranges include from about 25 to 150 µm, from about 25 to 120 µm, from about 30 to 150 µm, from about 30 to 120 µm, from about 40 to 150 µm, from about 40 to 120 µm, from about 50 to 150 µm, and from about 50 to 120 µm.

### [Adhesive Layer 5]

In the packaging material 10, the adhesive layer 5 is a layer that is optionally provided between the heat-sealable resin layer 4 and the barrier layer 3 (or the barrier layer protective film 3a, if it is present), in order to strongly bond these layers.

The adhesive layer 5 is preferably formed of a cured product of a resin composition containing at least one of a polyester and a polycarbonate, and at least one of an alicyclic isocyanate compound and an aromatic isocyanate compound. This prevents delamination between the above-described barrier layer 3 and heat-sealable resin layer 4 in a high-temperature environment, and can also achieve a high sealing strength, in the all-solid-state battery packaging material 10 of the present disclosure.

The polyester is preferably a polyester polyol. The polyester polyol is not limited as long as it has an ester bond in the polymer main chain and has a plurality of hydroxy groups at the ends or a side chain. The polycarbonate is preferably a polycarbonate polyol. The polyester polyol is not limited as long as it has a carbonate bond in the polymer main chain and has a plurality of hydroxy groups at the ends or a side chain. Alternatively, the polyester is preferably, for example, a polyester obtained beforehand by reacting a polyester polyol with a polyisocyanate (such as a diisocyanate) to achieve urethane chain extension, or a polycarbonate obtained beforehand by reacting a polycarbonate polyol with a polyisocyanate (such as a diisocyanate) to achieve urethane chain extension. In the resin composition forming the adhesive layer 5, a single polyester or two or more polyesters may be contained, and likewise, a single polycarbonate or two or more polycarbonates may be contained.

The alicyclic isocyanate compound is not limited as long as it is a compound having an alicyclic structure and isocyanate groups. The alicyclic isocyanate compound preferably has two or more isocyanate groups. Specific examples of the alicyclic isocyanate compound include isophorone diisocyanate (IPDI), bis(4-isocyanatecyclohexyl)methane, 1,3-bis(isocyanatomethyl)cyclohexane, and methylenebis(4,1 -cyclohexylene) diisocyanate, as well as polymer or isocyanurate forms thereof, mixtures thereof, or copolymers thereof with other polymers. Examples also include adducts, biurets, and isocyanurates. Alternatively, the alicyclic isocyanate compound is preferably a polyol-modified polyisocyanate obtained beforehand by reacting an alicyclic isocyanate with a polyol (such as a polyester polyol). In the resin composition forming the adhesive layer 5, a single alicyclic isocyanate or two or more alicyclic isocyanates may be contained.

The aromatic isocyanate compound is not limited as long as it is a compound having an aromatic ring and isocyanate groups. The aromatic isocyanate compound preferably has two or more isocyanate groups. Specific examples of the aromatic isocyanate compound include tolylene diisocyanate (TDI) and diphenylmethane diisocyanate (MDI), as well as polymer or isocyanurate forms thereof, mixtures thereof, or copolymers thereof with other polymers. Examples also include adducts, biurets, and isocyanurates. Alternatively, the aromatic isocyanate compound is preferably a polyol-modified polyisocyanate obtained beforehand by reacting an aromatic isocyanate with a polyol (such as a polyester polyol). In the resin composition forming the adhesive layer 5, a single aromatic isocyanate compound or two or more aromatic isocyanate compounds may be contained.

It is only required that the resin composition forming the adhesive layer 5 contains at least one of an alicyclic isocyanate compound and an aromatic isocyanate compound; for example, the resin composition forming the adhesive layer 5 may contain an alicyclic isocyanate compound, and may not contain an aromatic isocyanate compound; or, for example, may contain an aromatic isocyanate compound, and may not contain an alicyclic isocyanate compound; or, for example, may contain both an alicyclic isocyanate compound and an aromatic isocyanate compound. The resin composition forming the adhesive layer 5 preferably contains an aromatic isocyanate compound.

The content of each of the alicyclic isocyanate compound and the aromatic isocyanate compound in the adhesive layer 5 is preferably in the range of 0.1 to 50% by mass, and more preferably in the range of 0.5 to 40% by mass, in the resin composition constituting the adhesive layer 5. When the adhesive layer 5 contains both an alicyclic isocyanate compound and an aromatic isocyanate compound, the total content of these compounds is preferably in the range of 0.1 to 50% by mass, and more preferably in the range of 0.5 to 40% by mass, in the resin composition constituting the adhesive layer 5.

The thickness of the adhesive layer 5 is preferably about 50 µm or less, about 40 µm or less, about 30 µm or less, about 20 µm or less, about 7 µm or less, or about 5 µm or less. On the other hand, the thickness of the adhesive layer 5 is preferably about 0.1 µm or more, or about 0.5 µm or more. Preferred ranges of the thickness include from about 0.1 to 50 µm, from about 0.1 to 40 µm, from about 0.1 to 30 µm, from about 0.1 to 20 µm, from about 0.1 to 7 µm, from about 0.1 to 5 µm, from about 0.5 to 50 µm, from about 0.5 to 40 µm, from about 0.5 to 30 µm, from about 0.5 to 20 µm, from about 0.5 to 7 µm, and from about 0.5 to 5 µm.

Examples of the resin to be used for forming the adhesive layer 5 may include the same adhesives as exemplified for the adhesive agent layer 2. From the viewpoint of strongly bonding the adhesive layer 5 to the heat-sealable resin layer 4, the resin to be used for forming the adhesive layer 5 preferably contains a polyolefin backbone, and examples of the resin include the polyolefins and the acid-modified polyolefins as exemplified for the heat-sealable resin layer 4 described above. In this case, from the viewpoint of strongly bonding the adhesive layer 5 to the barrier layer 3, the adhesive layer 5 preferably contains an acid-modified polyolefin. Examples of the acid-modification component include dicarboxylic acids, such as maleic acid, itaconic acid, succinic acid, and adipic acid, or anhydrides thereof, acrylic acid, and methacrylic acid, with maleic anhydride being most preferred in view of ease of modification and general-purpose property. From the viewpoint of the heat resistance of the power storage device packaging material, the olefin component is preferably a polypropylene-based resin, and the adhesive layer 5 most preferably contains maleic anhydride-modified polypropylene.

The inclusion of the polyolefin backbone in the resin constituting the adhesive layer 5 can be analyzed by, for example, infrared spectroscopy or gas chromatography-mass spectrometry, although the analytical method is not limited. The inclusion of an acid-modified polyolefin in the resin constituting the adhesive layer 5 can be analyzed, for example, as follows. When, for example, a maleic anhydride-modified polyolefin is measured by infrared spectroscopy, peaks derived from maleic anhydride are detected at a wavelength near 1760 cm⁻¹ and a wavelength near 1780 cm⁻¹. However, if the degree of acid modification is low, the peaks may be so small that they cannot be detected. In that case, the analysis can be performed by nuclear magnetic resonance spectroscopy.

Furthermore, from the viewpoint of ensuring the durability such as heat resistance and contents resistance of the power storage device packaging material, and the moldability while reducing the thickness, the adhesive layer 5 is more preferably a cured product of a resin composition containing an acid-modified polyolefin and a curing agent. Preferred examples of the acid-modified polyolefin include the same acid-modified polyolefins as those exemplified above.

Preferably, the adhesive layer 5 is a cured product of a resin composition containing an acid-modified polyolefin and at least one selected from the group consisting of a compound having an isocyanate group, a compound having an oxazoline group, and a compound having an epoxy group. Particularly preferably, the adhesive layer 5 is a cured product of a resin composition containing an acid-modified polyolefin and at least one selected from the group consisting of a compound having an isocyanate group and a compound having an epoxy group. The adhesive layer 5 preferably contains at least one selected from the group consisting of a polyurethane, a polyester, and an epoxy resin, and more preferably contains a polyurethane and an epoxy resin. Preferred examples of the polyester include an ester resin produced by reacting an epoxy group and a maleic anhydride group, and an amide ester resin produced by reacting an oxazoline group and a maleic anhydride group. When unreacted matter of the curing agent such as the compound having an isocyanate group, the compound having an oxazoline group, or the epoxy resin remains in the adhesive layer 5, the presence of the unreacted matter can be confirmed using a method selected from, for example, infrared spectroscopy, Raman spectroscopy, and time-of-flight secondary ion mass spectrometry (TOF-SIMS).

Moreover, from the viewpoint of further improving the adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C - O-C bond. Examples of the curing agent having a heterocyclic ring include a curing agent having an oxazoline group and a curing agent having an epoxy group. Examples of the curing agent having a C=N bond include a curing agent having an oxazoline group and a curing agent having an isocyanate group. Examples of the curing agent having a C-O-C bond include a curing agent having an oxazoline group and a curing agent having an epoxy group. The fact that the adhesive layer 5 is a cured product of a resin composition containing these curing agents can be confirmed using a method such as gas chromatography-mass spectrometry (GCMS), infrared spectroscopy (IR), time-of-flight secondary ion mass spectrometry (TOF-SIMS), or X-ray photoelectron spectroscopy (XPS).

While the compound having an isocyanate group is not limited, it is preferably a polyfunctional isocyanate compound, from the viewpoint of effectively improving the adhesion between the barrier layer 3 and the adhesive layer 5. The polyfunctional isocyanate compound is not limited as long as it is a compound having two or more isocyanate groups. Specific examples of polyfunctional isocyanate-based curing agents include pentane diisocyanate (PDI), isophorone diisocyanate (IPDI), hexamethylene diisocyanate (HDI), tolylene diisocyanate (TDI), and diphenylmethane diisocyanate (MDI), as well as polymer or isocyanurate forms thereof, mixtures thereof, or copolymers thereof with other polymers. Examples also include adducts, biurets, and isocyanurates.

The content of the compound having an isocyanate group in the adhesive layer 5 is preferably in the range of 0.1 to 50% by mass, and more preferably in the range of 0.5 to 40% by mass, in the resin composition forming the adhesive layer 5. This can effectively improve the adhesion between the barrier layer 3 and the adhesive layer 5.

The compound having an oxazoline group is not limited as long as it is a compound having an oxazoline backbone. Specific examples of the compound having an oxazoline group include those having a polystyrene main chain and those having an acrylic main chain. Examples of commercial products include the Epocros series manufactured by Nippon Shokubai Co., Ltd.

The content of the compound having an oxazoline group in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

Examples of the compound having an epoxy group include an epoxy resin. The epoxy resin is not limited as long as it is a resin capable of forming a crosslinked structure with an epoxy group present in the molecule, and may be any of known epoxy resins. The weight average molecular weight of the epoxy resin is preferably about 50 to 2,000, more preferably about 100 to 1,000, and still more preferably about 200 to 800. In the first aspect of the disclosure, the weight average molecular weight of the epoxy resin is the value as measured by gel permeation chromatography (GPC), measured under conditions using polystyrene as standard samples.

Specific examples of the epoxy resin include glycidyl ether derivative of trimethylolpropane, bisphenol A diglycidyl ether, modified bisphenol A diglycidyl ether, bisphenol F-type glycidyl ether, novolac glycidyl ether, glycerol polyglycidyl ether, and polyglycerol polyglycidyl ether. A single epoxy resin may be used alone, or two or more epoxy resins may be used in combination.

The content of the epoxy resin in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

The polyurethane is not limited, and may be any of known polyurethanes. The adhesive layer 5 may be, for example, a cured product of a two-liquid curable polyurethane.

The content of the polyurethane in adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5, in an atmosphere containing a component that induces corrosion of the barrier layer, such as an electrolytic solution.

When the adhesive layer 5 is a cured product of a resin composition containing the above-described acid-modified polyolefin and at least one selected from the group consisting of a compound having an isocyanate group, a compound having an oxazoline group, and an epoxy resin, the acid-modified polyolefin functions as a base resin, and each of the compound having an isocyanate group, the compound having an oxazoline group, and the compound having an epoxy group functions as a curing agent.

The adhesive layer 5 may contain a modifier having a carbodiimide group.

As described above, when the adhesive layer 5 is an adhesive as exemplified for the adhesive agent layer 2 or a cured product of an acid-modified polyolefin and a curing agent, the thickness of the adhesive layer 5 is preferably about 1 to 10 µm, and more preferably about 1 to 5 µm. When the adhesive layer 5 is a resin as exemplified for the heat-sealable resin layer 4, the thickness of the adhesive layer 5 is preferably about 2 to 50 µm, and more preferably about 10 to 40 µm. When the adhesive layer 5 is an adhesive as exemplified for the adhesive agent layer 2 or a cured product of a resin composition containing an acid-modified polyolefin and a curing agent, the adhesive layer 5 can be formed by, for example, applying the resin composition, and curing by heating or the like. When the adhesive layer 5 is a resin as exemplified for the heat-sealable resin layer 4, the adhesive layer 5 can be formed by, for example, extrusion molding of the heat-sealable resin layer 4 and the adhesive layer 5.

### [Surface Coating Layer 6]

The packaging material 10 may optionally include a surface coating layer 6 on an outer side of the base material layer 1 (opposite to the barrier layer 3 on the base material layer 1) of the laminate, for at least one of the purposes of improving the designability, scratch resistance, and moldability, for example. The surface coating layer 6 is a layer positioned as the outermost layer of the packaging material 10 when an all-solid-state battery is assembled using the packaging material 10.

The surface coating layer 6 may be formed using a resin such as polyvinylidene chloride, a polyester, a polyurethane, an acrylic resin, or an epoxy resin, for example.

When the resin forming the surface coating layer 6 is a curable resin, the resin may be either a one-liquid curable resin or a two-liquid curable resin, preferably a two-liquid curable resin. The two-liquid curable resin may be, for example, a two-liquid curable polyurethane, a two-liquid curable polyester, or a two-liquid curable epoxy resin. Among the above, a two-liquid curable polyurethane is preferred.

The two-liquid curable polyurethane may be, for example, a polyurethane that contains a first agent containing a polyol compound and a second agent containing an isocyanate compound. The two-liquid curable polyurethane is preferably a two-liquid curable polyurethane that contains a polyol such as a polyester polyol, a polyether polyol, or an acrylic polyol as the first agent, and an aromatic or aliphatic polyisocyanate as the second agent. The polyurethane may be, for example, a polyurethane that contains a polyurethane compound obtained beforehand by reacting a polyol compound and an isocyanate compound, and an isocyanate compound. The polyurethane may be, for example, a polyurethane that contains a polyurethane compound obtained beforehand by reacting a polyol compound and an isocyanate compound, and a polyol compound. The polyurethane may be, for example, a polyurethane produced by curing a polyurethane compound obtained beforehand by reacting a polyol compound and an isocyanate compound, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. An aliphatic isocyanate compound refers to an isocyanate having an aliphatic group and no aromatic ring, an alicyclic isocyanate compound refers to an isocyanate having an alicyclic hydrocarbon group, and an aromatic isocyanate compound refers to an isocyanate having an aromatic ring.

At least one of the surface and the inside of the surface coating layer 6 may optionally contain additives, such as the above-mentioned lubricants, anti-blocking agents, matting agents, flame retardants, antioxidants, tackifiers, and anti-static agents, depending on the functionality and the like to be imparted to the surface coating layer 6 and the surface thereof. Examples of the additives include fine particles having an average particle diameter of about 0.5 nm to 5 µm. The average particle diameter of the additives is the median diameter as measured using a laser diffraction/scattering particle size distribution analyzer.

The additives may be either inorganic or organic. The additives are also not limited in shape, and may be spherical, fibrous, plate-like, amorphous, or flake-like, for example.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acrylic, crosslinked styrene, crosslinked polyethylene, benzoguanamine, gold, aluminum, copper, and nickel. These additives may be used alone or in combination. Among these additives, silica, barium sulfate, and titanium oxide are preferred from the viewpoint of dispersion stability, costs, and the like. Surfaces of the additives may be subjected to various types of surface treatment, such as insulation treatment and dispersibility enhancing treatment.

Examples of methods of forming the surface coating layer 6 include, but are not limited to, applying the resin for forming the surface coating layer 6. When an additive is to be used in the surface coating layer 6, the resin blended with the additive may be applied.

The thickness of the surface coating layer 6 is not limited as long as the above-described function as the surface coating layer 6 is exhibited; for example, it is about 0.5 to 10 µm, and preferably about 1 to 5 µm.

The method for producing the packaging material 10 is not limited as long as it produces a laminate in which the layers of the packaging material 10 are laminated. Examples of the method include a method comprising the step of laminating at least the base material layer 1, the barrier layer 3, the adhesive layer 5, and the heat-sealable resin layer 4 in this order.

One example of the method for producing the packaging material 10 is as follows. First, a laminate including the base material layer 1, the adhesive agent layer 2, and the barrier layer 3 in this order (the laminate may be hereinafter denoted as the "laminate A") is formed. Specifically, the laminate A can be formed using a dry lamination method as follows. The adhesive to be used for forming the adhesive agent layer 2 is applied to the base material layer 1 or to the barrier layer 3, using a coating method such as a gravure coating method or a roll coating method, and dried. Then, the barrier layer 3 or the base material layer 1 is laminated thereon, and the adhesive agent layer 2 is cured.

Subsequently, the adhesive layer 5 and the heat-sealable resin layer 4 are laminated on the barrier layer of the laminate A. Exemplary methods include the following: (1) a method in which the adhesive layer 5 and the heat-sealable resin layer 4 are co-extruded to be laminated on the barrier layer 3 of the laminate A (co-extrusion lamination method); (2) a method in which a laminate in which the adhesive layer 5 and the heat-sealable resin layer 4 are laminated is separately formed, and this laminate is laminated on the barrier layer 3 of the laminate A using a thermal lamination method; (3) a method in which the adhesive for forming the adhesive layer 5 is laminated on the barrier layer 3 of the laminate A by, for example, applying the adhesive onto the barrier layer 3 using an extrusion method or solution coating, followed by drying at a high temperature and further baking, and then the heat-sealable resin layer 4 pre-formed into a sheet is laminated on the adhesive layer 5 using a thermal lamination method; and (4) a method in which the adhesive layer 5 that has been melted is poured between the barrier layer 3 of the laminate A and the heat-sealable resin layer 4 pre-formed into a sheet, and simultaneously the laminate A and the heat-sealable resin layer 4 are bonded with the adhesive layer 5 sandwiched therebetween (sandwich lamination method).

When the surface coating layer 6 is to be provided, the surface coating layer 6 is laminated on the surface of the base material layer 1 opposite to the barrier layer 3. The surface coating layer 6 can be formed by, for example, applying the above-mentioned resin for forming the surface coating layer 6 onto the surface of the base material layer 1. The order of the step of laminating the barrier layer 3 on the surface of the base material layer 1 and the step of laminating the surface coating layer 6 on the surface of the base material layer 1 is not limited. For example, the surface coating layer 6 may be formed on the surface of the base material layer 1, and then the barrier layer 3 may be formed on the surface of the base material layer 1 opposite to the surface coating layer 6.

In the manner as described above, a laminate is formed including the optional surface coating layer 6/the base material layer 1/the optional adhesive agent layer 2/the optional barrier layer protective film 3b/the barrier layer 3/the optional barrier layer protective film 3a/the optional adhesive layer 5/the heat-sealable resin layer 4 in this order. The laminate may further be subjected to heat treatment of a heat-roll contact type, a hot-air type, a near- or far-infrared radiation type, or the like, in order to strengthen the adhesiveness of the adhesive agent layer 2 and the adhesive layer 5. This heat treatment may be performed, for example, at about 150 to 250°C for about 1 to 5 minutes.

Each of the layers constituting the packaging material 10 may be optionally subjected to surface activation treatment, such as corona treatment, blast treatment, oxidation treatment, or ozone treatment, in order to improve or stabilize the film formability, lamination processing and final product secondary processing (pouching and embossing molding) suitability, and the like. For example, when at least one surface of the base material layer 1 is subjected to corona treatment, the film formability, lamination processing and final product secondary processing suitability, and the like can be improved or stabilized. Furthermore, for example, when the surface of the base material layer 1 opposite to the barrier layer 3 is subjected to corona treatment, ink printability on the surface of the base material layer 1 can be improved.

### Examples

The present disclosure will be hereinafter described in detail with reference to examples and comparative examples; however, the present disclosure is not limited to the examples.

### [Example 1]

As a base material layer, a polyethylene terephthalate film (PET film A, 25 µm) having the physical properties as shown in Table 1 was prepared. As a barrier layer, an aluminum alloy foil (JIS H4160: 1994 A8021H-O, thickness 40 µm) was prepared. Both surfaces of the aluminum foil had been subjected to chemical conversion treatment. The chemical conversion treatment of the aluminum foil was performed by applying a treatment solution containing a phenol resin, a chromium fluoride compound, and phosphoric acid to both surfaces of the aluminum foil using a roll coating method, such that the amount of chromium applied became 10 mg/m² (dry mass), followed by baking. As a heat-sealable resin layer, an unstretched polybutylene terephthalate film (thickness: 50 µm) containing 3.5% by mass of an elastomer (polytetramethylene glycol) was prepared. Raman spectroscopy can be used to confirm whether the polybutylene terephthalate film is an unstretched polybutylene terephthalate film or a stretched polybutylene terephthalate film.

The base material layer and the barrier layer were bonded by a dry lamination method, using a two-liquid curable urethane adhesive (containing a polycarbonate polyol as the first agent and an alicyclic isocyanate compound (containing isophorone diisocyanate) as the second agent), to produce a laminate of the base material layer 1 (25 µm)/adhesive agent layer 2 (3 µm)/barrier layer 3 (40 µm). Subsequently, the barrier layer side of the resulting laminate and the heat-sealable resin layer were bonded by a dry lamination method, using the two-liquid curable urethane adhesive used for forming the adhesive agent layer 2, to laminate the adhesive layer 5 (3 µm)/heat-sealable resin layer 4 (50 µm) on the barrier layer. Subsequently, the resulting laminate was aged and heated to give a packaging material formed of a laminate including the base material layer 1 (polyethylene terephthalate film (25 µm))/adhesive agent layer 2 (cured product of a two-liquid curable urethane adhesive (3 µm))/barrier layer 3 (aluminum alloy foil (40 µm))/adhesive layer 5 (cured product of a two-liquid curable urethane adhesive) (3 µm)/heat-sealable resin layer 4 (polybutylene terephthalate film containing an elastomer (50 µm)) in this order. The structure of the packaging material is shown in Table 1.

### [Example 2]

A packaging material formed of a laminate including a base material layer (PET film A (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film (50 µm)) in this order was obtained as in Example 1, except that an unstretched polybutylene terephthalate film (thickness: 40 µm) containing no elastomer (polytetramethylene glycol) was used as an unstretched polybutylene terephthalate film forming the heat-sealable resin layer 4.

### [Example 3]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film containing an elastomer (50 µm)) in this order was obtained as in Example 1, except that a two-liquid curable urethane adhesive containing a polyester urethane polyol as the first agent and an alicyclic isocyanate compound (containing isophorone diisocyanate) as the second agent was used to form each of the adhesive agent layer for bonding the base material layer and the barrier layer and the adhesive layer for bonding the barrier layer and the heat-sealable resin layer.

### [Example 4]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film (40 µm)) in this order was obtained as in Example 2, except that a two-liquid curable urethane adhesive containing a polyester urethane polyol as the first agent and an alicyclic isocyanate compound (containing isophorone diisocyanate) as the second agent was used to form each of the adhesive agent layer for bonding the base material layer and the barrier layer and the adhesive layer for bonding the barrier layer and the heat-sealable resin layer.

### [Example 5]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film containing an elastomer (50 µm)) in this order was obtained as in Example 1, except that a polyethylene terephthalate film (PET film B, 25 µm) having the physical properties as shown in Table 1 was used as the base material layer, and a two-liquid curable urethane adhesive containing a polyester polyol as the first agent and an aromatic isocyanate compound (containing tolylene diisocyanate) as the second agent was used to form each of the adhesive agent layer for bonding the base material layer and the barrier layer and the adhesive layer for bonding the barrier layer and the heat-sealable resin layer.

### [Example 6]

A packaging material formed of a laminate including a base material layer (polyethylene terephthalate film (25 µm))/adhesive agent layer (cured product of a two-liquid curable adhesive (3 µm))/barrier layer (aluminum alloy foil (40 µm))/adhesive layer (cured product of a two-liquid curable adhesive) (3 µm)/heat-sealable resin layer (polybutylene terephthalate film containing an elastomer (50 µm)) in this order was obtained as in Example 1, except that a two-liquid curable adhesive containing maleic anhydride-modified polypropylene as the first agent and an aromatic isocyanate compound (containing tolylene diisocyanate) as the second agent was used to form each of the adhesive agent layer for bonding the base material layer and the barrier layer and the adhesive layer for bonding the barrier layer and the heat-sealable resin layer.

### [Example 7]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (unstretched polypropylene film (50 µm)) in this order was obtained as in Example 1, except that a two-liquid curable urethane adhesive containing a polyester polyol as the first agent and an aromatic isocyanate compound (containing tolylene diisocyanate) as the second agent was used to form each of the adhesive agent layer for bonding the base material layer and the barrier layer and the adhesive layer for bonding the barrier layer and the heat-sealable resin layer, and an unstretched polypropylene film (thickness 50 µm) was used as the film forming the heat-sealable resin layer 4.

### [Comparative Example 1]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film containing an elastomer (50 µm)) in this order was obtained as in Example 5, except that a polyethylene terephthalate film (PET film C, 25 µm) having the physical properties as shown in Table 1 was used as the base material layer.

### [Comparative Example 2]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film containing an elastomer (50 µm)) in this order was obtained as in Example 5, except that a polyethylene terephthalate film (PET film D, 25 µm) having the physical properties as shown in Table 1 was used as the base material layer.

### [Comparative Example 3]

A packaging material formed of a laminate including a base material layer (polyethylene terephthalate film (25 µm))/adhesive agent layer (cured product of a two-liquid curable urethane adhesive (3 µm))/barrier layer (aluminum alloy foil (40 µm))/adhesive layer (cured product of a two-liquid curable urethane adhesive) (3 µm)/heat-sealable resin layer (polybutylene terephthalate film containing an elastomer (50 µm)) in this order was obtained as in Example 5, except that a polyethylene terephthalate film (PET film E, 25 µm) having the physical properties as shown in Table 1 was used as the base material layer.

### [Measurement of Elastomer Content]

The elastomer content in each of the polybutylene terephthalate films used in the examples and comparative examples was measured using the following measurement method. The heat-sealable resin layer (polybutylene terephthalate film) was scraped off from the laminate constituting the packaging material with a knife to separate only the heat-sealed layer. The polybutylene terephthalate film obtained was cut to give about 55 mg of a test sample. Subsequently, the test sample was placed in a screw tube bottle, 0.5 mL of deuterated chloroform and 0.5 mL of HFIP solvent were added with a micropipettor, and the test sample was sufficiently dissolved. The dissolved test sample was transferred into an NMR sample tube, and measurement of the elastomer content in the polybutylene terephthalate film was performed. The measurement apparatus and the measurement conditions were as follows:

### <Measurement Apparatus and Measurement Conditions>

- Apparatus: NMR AVANCE 400 MHz, manufactured by Bruker Japan
- Probe: PADUL 400S1 C-H-D05 Z BTO PLUS, manufactured by Bruker Japan
- Measurement nucleus: 1 H
- Solvent: HFIP (1,1,1,3,3,3-hexafluoro-2-propanol)/CDCl₃ solvent mixture
- Sample amount: 55 mg/1 mL (solvent)
- Measurement temperature: room temperature
- Integration times: ¹H/64 times
- Waiting time: ¹H/5 s
- Window function: exponential

### [Tensile Test for Base Material Layer]

In each of the MD and TD directions of the resin film used as the base material layer, the tensile rupture elongation, the stress (MPa) at 2% stretching, and the stress (MPa) at a rupture point were measured using a method as specified in the test method for tensile properties of JIS K7127:1999. AG-Xplus (trade name) manufactured by Shimadzu Corporation was used as a tensile testing machine. The test sample was 15 mm in width, the gauge length was 30 mm, the tensile speed was 50 mm/min, and the test environment was 23°C. Each measurement value was an average value of three measurements in each of the MD direction and TD direction. In a graph obtained from this test (horizontal axis: strain (%); vertical axis: stress (MPa)), the point at which the test sample ruptured was defined as the rupture point, and a value obtained by dividing the stress (MPa) at 2% stretching by the stress (MPa) at the rupture point (stress at 2% stretching/stress at the rupture point) was calculated. The tensile rupture elongation is the elongation (strain) (%) at the rupture point of the test sample. The results are shown in Table 2.

### [Tensile Test for Heat-Sealable Resin Layer]

In each of the MD and TD directions of the resin film used as the heat-sealable resin layer, the tensile rupture strength and the tensile rupture elongation in a 23°C environment or a 120°C environment were measured using a method as specified in the test method for tensile properties of JIS K7127:1999. AG-Xplus (trade name) manufactured by Shimadzu Corporation was used as a tensile testing machine. The test sample was dumbbell-shaped as specified in JIS-K 6251-7, the gauge length was 15 mm, the tensile speed was 50 mm/min, and the test environment was 23°C or 120°C. Each measurement value was an average value of three measurements in each of the MD direction and TD direction. The tensile rupture strength is the stress (MPa) at the rupture point of the test sample. The tensile rupture elongation is the elongation (strain) (%) at the rupture point of the test sample. The results are shown in Table 2.

### [Sealing Strength]

The sealing strength of the packaging material at a measurement temperature of 25°C or 120°C was each measured as specified in JIS K7127:1999, as follows. A test sample was prepared by cutting the packaging material into a strip with a width of 15 mm in the TD direction. Specifically, as shown in Fig. 7, first, each packaging material was cut into 60 mm (TD direction) × 120 mm (MD direction) (Fig. 7a). Subsequently, the packaging material was folded in half in the MD direction at the position of the fold P (midpoint in the MD direction), in such a manner that the heat-sealable resin layers were opposed to each other (Fig. 7b). At about 10 mm toward the inner side in the MD direction from the fold P, the heat-sealable resin layers were heat-sealed to each other at a seal width of 7 mm, a temperature of 230°C, and a surface pressure of 1.0 MPa for 5 seconds (Fig. 7c). In Fig. 7c, the shaded region S is the heat-sealed region. Subsequently, the packaging material was cut in the MD direction to give a width of 15 mm in the TD direction (cut at the positions indicated by the double-dotted lines in Fig. 7d) to give a specimen 13 (Fig. 7e). Subsequently, after the specimen 13 was allowed to stand at each measurement temperature for 2 minutes, the heat-sealable resin layers at the heat-sealed region were peeled at a speed of 300 mm/min, using a tensile testing machine (AG-Xplus (trade name) manufactured by Shimadzu Corporation), in each measurement-temperature environment (Fig. 8). The maximum strength at the time of peeling was defined as the sealing strength (N/15 mm). The gauge length was 30 mm. The results are shown in Table 2.

### [Evaluation of Moldability]

Each power storage device packaging material was cut into a rectangle with a length (MD direction) of 120 mm and a width (TD direction) of 80 mm for use as a test sample. The MD of the power storage device packaging material corresponds to the rolling direction (RD) of the aluminum alloy foil, and the TD of the power storage device packaging material corresponds to the TD of the aluminum alloy foil. In a 25°C environment, this sample was cold-molded (draw-in one-step molding) at a pressing pressure (surface pressure) of 0.4 MPa while varying the molding depth from a molding depth of 0.5 mm in 0.5 mm increments, using a rectangular molding die with an opening size of 31.6 mm (MD direction) × 54.5 mm (TD direction) (female die; the surface had a maximum height of roughness profile (nominal value of Rz) of 3.2 µm, as specified in Table 2 of JIS B 0659-1: 2002 Appendix 1 (Referential) Surface Roughness Standard Specimens for Comparison; corner R: 2.0 mm; ridge R: 1.0 mm) and a corresponding molding die (male die; the surface of the ridge region had a maximum height of roughness profile (nominal value of Rz) of 1.6 µm, as specified in Table 2 of JIS B 0659-1: 2002 Appendix 1 (Referential) Surface Roughness Standard Specimens for Comparison; and the surface of the region other than the ridge region had a maximum height of roughness profile (nominal value of Rz) of 3.2 µm, as specified in Table 2 of JIS B 0659-1: 2002 Appendix 1 (Referential) Surface Roughness Standard Specimens for Comparison; corner R: 2.0 mm; ridge R: 1.0 mm). Here, molding was performed with the above-described test sample being placed on the female die such that the heat-sealable resin layer side was positioned on the male die side. The clearance between the male die and the female die was 0.3 mm. The cold-molded sample was inspected for pinholes and cracks in the aluminum foil, by directing light to the sample with a penlight in a dark room, and allowing the light to pass therethrough. The deepest molding depth at which no pinholes and cracks occurred in the aluminum foil for all of five samples was evaluated as shown below. The results are shown in Table 2.
A: 6 mm or more
C: less than 6 mm

**[Table 1]**

| | Structure of All-Solid-State Battery Packaging Material | | | | | |
|---|---|---|---|---|---|---|
| | Base Material Layer 1 | Adhesive Agent Layer 2 and Adhesive Layer 5 | | Brrier Layer 3 | Heat-Sealable Resin Layer 4 | |
| | | First Agent | Second Agent | | Resin | Elastomer |
| Ex. 1 | PET Film A | Polycarbonate Polyol | Alicyclic Isocyanate Compound | Aluminum Alloy Foil | PBT | Polytetramethylene Glycol 3.5% by mass |
| Ex. 2 | PET Film A | Polycarbonate Polyol | Alicyclic Isocyanate Compound | Aluminum Alloy Foil | PBT | - |
| Ex. 3 | PET Film A | Polyester Urethane | Alicyclic Isocyanate Compound | Aluminum Alloy Foil | PBT | Polytetramethylene Glycol 3.5% by mass |
| Ex. 4 | PET Film A | Polyester Urethane | Alicyclic Isocyanate Compound | Aluminum Alloy Foil | PBT | - |
| Ex. 5 | PET Film B | Pol yester Polyol | Aromatic Isocyanate Compound | Aluminum Alloy Foil | PBT | Polytetramethylene Glycol 3.5% by mass |
| Ex. 6 | PET Film A | Acid-Modified Polypropylene | Aromatic Isocyanate Compound | Aluminum Alloy Foil | PBT | Polytetramethylene Glycol 3.5% by mass |
| Ex. 7 | PET Film A | Polyester Polyol | Aromatic Isocyanate Compound | Aluminum Alloy Foil | CPP | - |
| Comp. Ex. 1 | PET Film C | Polyester Polyol | Aromatic Isocyanate Compound | Aluminum Alloy Foil | PBT | Polytetramethylene Glycol 3.5% by mass |
| Comp. Ex. 2 | PET Film D | Polyester Polyol | Aromatic Isocyanate Compound | Aluminum Alloy Foil | PBT | Polytetramethylene Glycol 3.5% by mass |
| Comp. Ex. 3 | PET Film E | Polyester Polyol | Aromatic Isocyanate Compound | Aluminum Alloy Foil | PBT | Polytetramethylene Glycol 3.5% by mass |

**[Table 2]**

| | Base Material Laver 1 | | | | Heat Sealable Resin Laver 4 | | | | | | | | All-Solid-State Battery Packaging Material | | |
|---|---|---|---|---|---|---|---|---|---|---|---|---|---|---|---|
| | Tensile Rupture Elongation (%) | | Stress at 2% Stretching/Stress at Rupture Point | | Tensile Rupture Elongation (%) | | Tensile Rupture Elongation (%) | | Tensile Rupture Strength (MPa) | | Tensile Rupture Strength (MPa) | | Moldability | Sealing Strength (MPa) | |
| | 23°C | | 23°C | | 23°C | | 120°C | | 23°C | | 120°C | | | 25°C | 120°C |
| | MD | TD | MD | TD | MD TD | | MD | TD | MD | TD | MD | TD | | | |
| Ex. 1 | 114 | 88 | 0.36 | 0.20 | 470 350 | | 380 | 650 | 19 | 14 | 5 | 16 | A | 50 | 40 |
| Ex. 2 | 114 | 88 | 0.36 | 0.20 | 400 300 | | 450 | 600 | 33 | 21 | 25 | 33 | A | 90 | 50 |
| Ex. 3 | 114 | 88 | 0.36 | 0.20 | 470 | 350 | 380 | 650 | 19 | 14 | 5 | 16 | A | 51 | 60 |
| Ex. 4 | 114 | 88 | 0.36 | 0.20 | 400 | 300 | 450 | 600 | 33 | 21 | 25 | 33 | A | 70 | 83 |
| Ex. 5 | 143 | 85 | 0.26 | 0.23 | 470 | 350 | 380 | 650 | 19 | 14 | 5 | 16 | A | 134 | 56 |
| Ex. 6 | 114 | 88 | 0.36 | 0.20 | 470 | 350 | 380 | 650 | 19 | 14 | 5 | 16 | A | 60 | Could Not Be Measured |
| Ex. 7 | 114 | 88 | 0.36 | 0.20 | 700 | 650 | 1000< | 1000< | 60 | 30 | Could Not Be Detected | Could Not Be Detected | A | 98 | Could Not Be Measured |
| Comp. Ex. 1 | 128 | 102 | 0.41 | 0.30 | 470 | 350 | 380 | 650 | 19 | 14 | 5 | 16 | C | 133 | 44 |
| Comp. Ex. 2 | 209 | 135 | 0.43 | 0.32 | 470 | 350 | 380 | 650 | 19 | 14 | 5 | 16 | C | 133 | 44 |
| Comp. Ex. 3 | 223 | 142 | 0.91 | 0.59 | 470 | 350 | 380 | 650 | 19 | 14 | 5 | 16 | C | 133 | 44 |

In Table 2, "Could Not Be Measured" means that the sealing strength at 120°C was so low that the measurement value could not be obtained from the tensile testing machine.

As described above, the present disclosure provides embodiments of the invention as itemized below:
Item 1. An all-solid-state battery packaging material comprising a laminate comprising at least a base material layer, a barrier layer, and a heat-sealable resin layer in this order from an outer side,
   wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.
Item 2. The all-solid-state battery packaging material according to item 1, wherein, for a test sample obtained by heat-sealing the heat-sealable resin layers of the all-solid-state battery packaging material to each other at a temperature of 230°C and a surface pressure of 1.0 MPa for 5 seconds, a sealing strength defined as a maximum strength, as measured when peeling the heat-sealed region at a measurement temperature of 120°C, a tensile speed of 300 mm/min, and a gauge length of 30 mm, as specified in JIS K7127:1999, is 30 N/15 mm or more.
Item 3. The all-solid-state battery packaging material according to item 1 or 2, wherein the base material layer contains a polyester.
Item 4. The all-solid-state battery packaging material according to any one of items 1 to 3, wherein the heat-sealable resin layer is formed of a polybutylene terephthalate film.
Item 5. The all-solid-state battery packaging material according to item 4, wherein the polybutylene terephthalate film contains an elastomer.
Item 6. The all-solid-state battery packaging material according to any one of items 1 to 5, which further comprises an adhesive layer between the barrier layer and the heat-sealable resin layer, wherein
   the adhesive layer is formed of a cured product of a resin composition containing at least one of a polyester and a polycarbonate, and at least one of an alicyclic isocyanate compound and an aromatic isocyanate compound.
Item 7. The all-solid-state battery packaging material according to item 6, wherein the alicyclic isocyanate compound contains isophorone diisocyanate.
Item 8. An all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,
   wherein the all-solid-state battery packaging material comprises a laminate comprising at least a base material layer, a barrier layer, and a heat-sealable resin layer in this order from an outer side, and
   a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.
Item 9. A method for producing an all-solid-state battery packaging material comprising the step of
   obtaining a laminate by laminating at least a base material layer, a barrier layer, and a heat-sealable resin layer in this order from an outer side,
   wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.

### Reference Signs List

1: Base material layer
2: Adhesive agent layer
3: Barrier layer
3a, 3b: Barrier layer protective film
4: Heat-sealable resin layer
5: Adhesive layer
6: Surface coating layer
10: All-solid-state battery packaging material
20: Negative electrode layer
21: Negative electrode active material layer
22: Negative electrode current collector
30: Positive electrode layer
31: Positive electrode active material layer
32: Positive electrode current collector
40: Solid electrolyte layer
50: Single cell
60: Terminal
70: All-solid-state battery

## Claims

1. An all-solid-state battery packaging material comprising a laminate comprising at least a base material layer, a barrier layer, and a heat-sealable resin layer in this order from an outer side,
wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.

2. The all-solid-state battery packaging material according to claim 1, wherein, for a test sample obtained by heat-sealing the heat-sealable resin layers of the all-solid-state battery packaging material to each other at a temperature of 230°C and a surface pressure of 1.0 MPa for 5 seconds, a sealing strength defined as a maximum strength, as measured when peeling the heat-sealed region at a measurement temperature of 120°C, a tensile speed of 300 mm/min, and a gauge length of 30 mm, as specified in JIS K7127:1999, is 30 N/15 mm or more.

3. The all-solid-state battery packaging material according to claim 1 or 2, wherein the base material layer contains a polyester.

4. The all-solid-state battery packaging material according to any one of claims 1 to 3, wherein the heat-sealable resin layer is formed of a polybutylene terephthalate film.

5. The all-solid-state battery packaging material according to claim 4, wherein the polybutylene terephthalate film contains an elastomer.

6. The all-solid-state battery packaging material according to any one of claims 1 to 5, which further comprises an adhesive layer between the barrier layer and the heat-sealable resin layer, wherein
the adhesive layer is formed of a cured product of a resin composition containing at least one of a polyester and a polycarbonate, and at least one of an alicyclic isocyanate compound and an aromatic isocyanate compound.

7. The all-solid-state battery packaging material according to claim 6, wherein the alicyclic isocyanate compound contains isophorone diisocyanate.

8. An all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,
wherein the all-solid-state battery packaging material comprises a laminate comprising at least a base material layer, a barrier layer, and a heat-sealable resin layer in this order from an outer side, and
a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.

9. A method for producing an all-solid-state battery packaging material comprising the step of:
obtaining a laminate by laminating at least a base material layer, a barrier layer, and a heat-sealable resin layer in this order from an outer side,
wherein a value obtained by dividing a stress (MPa) at 2% stretching by a stress (MPa) at a rupture point, as measured using a method as specified in the test method for tensile properties of JIS K7127:1999, in at least one of MD and TD directions of the base material layer, is 0.25 or less.
